Europäisches Patentamt

European Patent Office

Office européen des brevets

(11) Numéro de publication: **0 396 438**
**A1**

## (12) DEMANDE DE BREVET EUROPEEN

(21) Numéro de dépôt: **90400872.9**

(22) Date de dépôt: **30.03.90**

(51) Int. Cl.5: **G05B 19/405**

(30) Priorité: **03.05.89 FR 8906149**

(43) Date de publication de la demande:
**07.11.90 Bulletin 90/45**

(84) Etats contractants désignés:
**AT BE CH DE ES FR GB IT LI NL SE**

(71) Demandeur: **NUM S.A.**
**21, Avenue du Maréchal Foch**
**F-95101 Argenteuil(FR)**

(72) Inventeur: **Canourgues, Alain**
**110, Avenue d'Enghien**
**F-93800 Epinau-sur-Seine(FR)**

(74) Mandataire: **Marquer, Francis et al**
**Cabinet Moutard 35, Avenue Victor Hugo**
**F-78960 Voisins le Bretonneux(FR)**

(54) **Procédé de détermination automatique du trajet d'outil dans un usinage plan de zones.**

(57) Le procédé selon l'invention consiste à former un quadrillage de la zone à usiner suivant un pas fonction du diamètre de l'outil, et à utiliser ce quadrillage successivement pour élaborer une grille image de la zone à usiner, pour effectuer un déport de la zone à usiner et pour élaborer, après codage des points usinables de ladite zone, le chemin (CH) de l'axe de l'outil suivant une succession de déplacements linéaires dirigés, soit parallèlement aux axes X et Y du plan, soit à 45° par rapport à ceux-ci.

Application à la commande numérique.

FIG. 21

EP 0 396 438 A1

## PROCEDE DE DETERMINATION AUTOMATIQUE DU TRAJET D'OUTIL DANS UN USINAGE PLAN DE ZONES.

La présente invention concerne un procédé de détermination automatique du trajet d'outil dans un usinage plan d'une zone ou région quelconque d'une pièce, laquelle zone étant soit une poche (sous-entendu fermée), soit une poche dite ouverte, soit encore un surfaçage ; ce procédé s'applique aussi bien dans le cas où chacune de ces trois zones est considérée seule, c'est-à-dire dénuée de tout îlot et de tout évidement, que dans le cas où chacune de ces trois zones contient au moins un îlot et/ou au moins un évidement.

On rappelle les définitions suivantes :
- une poche est une zone de matière à usiner dont le profil extérieur est fermé et qui est entourée de matière à ne pas usiner ;
- une poche ouverte est une zone de matière à usiner délimitée extérieurement par une succession de parois et de bords de contour extérieur de la pièce, chaque paroi délimitant une région de matière à ne pas usiner ;
- un surfaçage est une zone de matière à usiner délimitée extérieurement par le contour de la pièce ;
- un îlot est une zone de matière à ne pas usiner dont le profil extérieur est fermé et qui est situé soit à l'intérieur d'une poche, soit à l'intérieur d'une poche ouverte, soit à l'intérieur d'un surfaçage, constituant en cela un obstacle à éviter lors de l'usinage ;
- un évidement est une zone de vide dont le profil extérieur est fermé et qui est formée soit dans une poche, soit dans une poche ouverte, soit dans un surfaçage.

Par ailleurs, d'une façon connue en soi, les divers profils considérés, respectivement de poche, de poche ouverte, de surfaçage, d'îlot et d'évidement, sont programmés séparément et consistent chacun, dans le plan d'usinage, en une succession de segments de droite et/ou d'arcs de cercle.

Connaissant le contour de la zone à usiner, défini dans le plan d'usinage, le problème qui se pose alors est de balayer totalement la zone à usiner, avec une fraise, sans déborder sur la limite-matière définie comme étant la limite avec une zone de matière à ne pas usiner (bord de poche ou îlot) et en respectant au mieux les contraintes d'usinage suivantes :
- minimiser le trajet de l'axe de l'outil ;
- minimiser le nombre de plongées - remontées de l'outil dans la zone à usiner, et donc le nombre de perçages dans ladite zone ;
- prendre en compte le mode de travail de l'outil (en avalant ou en opposition) ;
- éviter de repasser trop de fois sur un endroit déjà usiné ;
- éviter les traces d'entrée et de sortie de l'outil.

Actuellement, l'une des techniques connues d'usinage plan qui semble répondre le mieux à ces contraintes d'usinage fait appel à un algorithme permettant d'obtenir un déplacement de l'outil par des déports successifs parallèles du profil considéré. Toutefois, cette technique est d'une mise en oeuvre très complexe, en particulier lorsque l'on veut tenir compte de toutes les formes de profil possibles. Par ailleurs, son utilisation s'est jusqu'à présent limitée au cas d'une poche avec un seul îlot ou un seul évidement.

La présente invention a pour but de concevoir un procédé de détermination automatique du trajet d'outil lors d'un usinage plan, qui satisfait les contraintes d'usinage précédemment mentionnées, qui peut être utilisé aussi bien dans le cas d'une poche seule, d'une poche ouverte seule ou d'un surfaçage seul, c'est-à-dire sans îlot et sans évidement, que dans celui d'une poche, d'une poche ouverte ou d'un surfaçage avec au moins un îlot et ou au moins un évidement, et qui est d'une mise en oeuvre rapide et relativement simple.

A cet effet, l'idée maîtresse du procédé objet de l'invention est basée sur un quadrillage de la zone à usiner suivant un pas fonction du diamètre de l'outil, ce quadrillage étant ensuite utilisé pour élaborer un tableau ou grille image de la zone à usiner, pour effectuer un déport de la zone à usiner et pour élaborer le trajet de l'axe de l'outil suivant une succession de déplacements linéaires dirigés soit parallèlement aux axes du plan, soit à 45° par rapport à ceux-ci.

Ainsi, dans le cadre d'un usinage plan par exemple d'une poche (sous-entendu fermée) considérée seule et présentant un profil extérieur fermé constitué d'une succession de segments de droite et ou d'arcs de cercle, selon l'invention, le procédé de détermination automatique du trajet d'outil est caractérisé en ce qu'il comprend les étapes suivantes :

1/ une formation d'un quadrillage s'étendant dans le plan (X-Y) sur toute la poche suivant un même pas de lignes et de colonnes qui est fonction du diamètre de l'outil, les sommets du quadrillage étant repérés par des indices ligne et colonne ;

2. une quantification du profil de poche consistant :
- en partant du quadrillage, à déterminer par leurs indices respectifs de ligne et de colonne, d'une part, des points appelés points limites qui sont les sommets du quadrillage les plus proches du profil de poche, obtenus en recherchant pour chaque ligne et chaque colonne du quadrillage les intersections avec le profil et, d'autre part, les points situés respectivement à l'intérieur et à l'extérieur du profil qui sont les sommets du quadrillage laissés inoccupés par les points limites ;

- à reporter dans un tableau intermédiaire propre au profil de poche et de mêmes dimensions et de même pas de lignes et de colonnes que le quadrillage, aux mêmes emplacements indicés de ligne et de colonne que ceux du quadrillage, les points respectivement limites, intérieurs et extérieurs du profil en les représentant par des symboles respectifs d'identification ;

3/ une élaboration d'un tableau image de la poche, dit tableau résultat, de mêmes dimensions et de même pas de lignes et de colonnes que le tableau intermédiaire, se composant d'une première zone représentative de la poche et formée de points usinables qui sont affectés chacun d'un même premier caractère donné et qui correspondent aux points intérieurs du profil de poche, et d'une deuxième zone extérieure à la première et formée de points non usinables qui sont affectés chacun d'un même deuxième caractère donné différent du premier et qui correspondent aux points limites et extérieurs du profil de poche ;

4/ un déport du profil de poche consistant, en partant du tableau résultat précédemment élaboré, à déterminer pour chaque point non usinable de la deuxième zone du tableau résultat les points usinables de la première zone dont la distance audit point non usinable est inférieure au rayon de l'outil, et à transformer ces points usinables en points non usinables auxquels est affecté le même deuxième caractère ;

5/ un codage des points usinables de la première zone du tableau résultat une fois le déport réalisé, consistant :

- à prendre en compte un premier point quelconque de ladite zone, appelé point de départ, et à lui affecter un niveau représenté par l'entier 1 ;

- à prendre en compte un deuxième point voisin du point de départ et situé sur la même ligne ou la même colonne que celui-ci, et à lui affecter un niveau représenté par l'entier 2 ;

- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier $n+1$ si le point courant est affecté du niveau représenté par l'entier positif $n$ ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

6/ un usinage de la première zone du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :

- à déterminer un premier point codé, dit point de début d'usinage ;

- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

Toujours dans le cadre d'un usinage plan de cette même poche, mais contenant au moins un îlot et/ou au moins un évidement, la poche ainsi que l'îlot et/ou l'évidement présentant chacun un profil extérieur fermé constitué d'une succession de segments de droite et/ou d'arcs de cercle, le procédé selon l'invention reprend les six étapes précédemment numérotées 1/ à 6/ en précisant :

a) que l'étape 2/ est une quantification des profils considérés - poche, îlot et/ou évidement - consistant :

- pour chacun des profils considérés et en partant du même quadrillage, à déterminer par leurs indices respectifs de ligne et de colonne, d'une part, des points appelés points limites qui sont les sommets du quadrillage les plus proches du profil considéré, obtenus en recherchant pour chaque ligne et chaque colonne du quadrillage les intersections avec le profil et, d'autre part, les points situés respectivement à l'intérieur et à l'extérieur du profil qui sont les sommets du quadrillage laissés inoccupés par les points limites :

- à reporter dans un tableau intermédiaire propre à chacun des profils considérés et de mêmes dimensions et de même pas de lignes et de colonnes que le quadrillage, aux même emplacements indicés de ligne et de colonne que ceux du quadrillage, les points respectivement limites, intérieurs et extérieurs du profil considéré en les représentant par des symboles respectifs d'identification ;

b) que l'étape 3/ est une élaboration d'un tableau image de l'ensemble poche - îlot et/ou évidement, dit tableau résultat, de mêmes dimensions et de même pas de lignes et de colonnes que le tableau intermédiaire, se composant d'une première zone représentative de la poche et formée de points usinables qui sont affectés chacun d'un même premier caractère donné et qui correspondent aux points intérieurs du profil de poche, d'une deuxième zone extérieure à la première et formée de points non usinables qui sont affectés chacun d'un même deuxième caractère donné différent du premier et qui correspondent aux points limites et extérieurs du profil de poche, et à l'intérieur de la première zone, d'une troisième zone représentative de l'îlot et formée de points non usinables qui sont affectés chacun d'un même troisième caractère donné différent du deuxième et qui correspondent aux points limites et intérieurs du profil d'îlot, et ou d'une quatrième zone représentative de l'évidement et formée de points vides qui sont affectés chacun d'un même quatrième caractère donné différent du troisième et qui correspondent aux points limites et intérieurs du profil d'évidement ;

c) que l'étape 4 est un déport de chacun des profils consistant, en partant du tableau résultat précédemment élaboré :

- en ce qui concerne le profil de poche, à déterminer, pour chaque point non usinable de la deuxième zone du tableau résultat, les points usinables de la première zone dont la distance audit point non usinable est inférieure au rayon de l'outil, et à transformer ces points usinables en points non usinables auxquels est affecté le même deuxième caractère ;

- en ce qui concerne le profil d'îlot, à déterminer, pour chaque point non usinable de la troisième zone du tableau résultat, les points usinables de la première zone dont la distance audit point non usinable est inférieure au rayon de l'outil, et à transformer ces points usinables en points non usinables auxquels est affecté le même troisième caractère ;

- en ce qui concerne le profil d'évidement, à déterminer, pour chaque point usinable de la première zone du tableau résultat, les points vides de la quatrième zone dont la distance audit point usinable est inférieure au rayon de l'outil, et à transformer ces points vides en points usinables auxquels est affecté le même premier caractère.

Selon un autre aspect de l'invention, en partant du quadrillage dont le pas est choisi égal à la moitié de la prise de passe d'usinage, laquelle prise de passe étant fonction du diamètre de l'outil, le procédé comprend un traitement du tableau résultat après déport consistant à ne prendre en compte qu'une ligne sur deux et une colonne sur deux de manière à avoir un tableau résultat dont le pas est égal à la prise de passe d'usinage. Ainsi, en divisant par deux la résolution du tableau résultat après le déport, avantageusement, on diminue d'une manière significative le temps de traitement du processus lors des opérations subséquentes de codage et d'usinage.

D'autres caractéristiques et avantages de l'invention apparaîtront mieux dans la description détaillée qui suit et se réfère aux dessins annexés donnés uniquement à titre d'exemple et dans lesquels :

La figure 1 est un organigramme général du procédé selon l'invention ;

La figure 2 est un organigramme relatif aux étapes conjointes de quantification de profil et d'élaboration du tableau résultat de la figure 1 ;

La figure 3 représente sous forme d'organigramme l'algorithme de résultat de la figure 2 ;

La figure 4 est un organigramme relatif à l'étape de codage des points usinables de la figure 1 ;

La figure 5 représente un quadrillage d'un exemple de poche contenant un îlot et un évidement ;

Les figures 6 et 7 sont des schémas explicitant la détermination des points limites d'une portion de profil selon que cette dernière ne passe pas par un sommet du quadrillage (figure 6) ou passe par un sommet du quadrillage (figure 7) ;

Les figures 8 et 9 représentent le tableau propre au profil de poche selon l'exemple de la figure 5, après détermination des points limites (figure 8) et respectivement des points intérieurs et extérieurs (figure 9) du profil de poche ;

La figure 10 représente le tableau résultat image de la poche ;

Les figures 11 et 12 représentent le tableau propre au profil d'îlot selon l'exemple de la figure 5, après détermination des points limites (figure 11) et respectivement des points intérieurs et extérieurs (figure 12) du profil d'îlot ;

La figure 13 représente le tableau résultat image de la poche avec l'îlot ;

Les figures 14 et 15 représentent le tableau propre au profil d'évidement selon l'exemple de la figure 5, après détermination des points limites (figure 14) et respectivement des points intérieurs et extérieurs (figure 15) du profil d'évidement ;

La figure 16 représente le tableau résultat image de la poche avec l'îlot et l'évidement ;

La figure 17 représente le tableau résultat de la figure 16 après l'étape de déport des profils ;

La figure 18 représente le tableau résultat de la figure 17, mais de résolution divisée par deux ;

La figure 19 représente le tableau résultat de la figure 18 après l'étape de codage des points usinables ;

La figure 20 est un schéma explicitant lors du codage la recherche du point voisin non codé pour passer du point courant au point suivant ;

La figure 21 montre le trajet de l'outil par passage par les points codés de la figure 19 ;

La figure 22 représente un quadrillage du même exemple de la figure 5, mais s'appliquant à une poche ouverte contenant l'îlot et l'évidement ;

Les figures 23 et 24 représentent le tableau propre au profil extérieur global de la poche ouverte selon l'exemple de la figure 22, après détermination des points limites (figure 23) et respectivement des points intérieurs et extérieurs (figure 24) du profil extérieur global de la poche ouverte ;

La figure 25 représente le tableau résultat image de la poche ouverte à l'exception de sa paroi ;

Les figures 26 et 27 représentent le tableau propre au profil d'îlot selon l'exemple de la figure 22, après détermination des points limites (figure 26) et respectivement des points intérieurs et extérieurs (figure 27) du profil d'îlot ;

La figure 28 représente le tableau résultat image de la poche ouverte à l'exception de sa paroi, et avec l'îlot ;

Les figures 29 et 30 représentent le tableau propre au profil d'évidement selon l'exemple de la figure 22, après détermination des points limites (figure 29) et respectivement des points intérieurs et extérieurs (figure 30) du profil d'évidement ;

La figure 31 représente le tableau résultat image de la poche ouverte à l'exception de sa paroi, avec l'îlot et l'évidement ;

Les figures 32 et 33 représentent le tableau propre au profil de paroi de la poche ouverte selon l'exemple de la figure 22, après détermination des points limites (figure 32) et respectivement des points extérieurs (figure 33) du profil de paroi de la poche ouverte ;

La figure 34 représente le tableau résultat image de la poche ouverte avec l'îlot et l'évidement ;

La figure 35 représente le tableau résultat de la figure 34 après l'étape de déport des profils ;

La figure 36 représente le tableau résultat de la figure 35, mais de résolution divisée par deux ;

La figure 37 représente le tableau résultat de la figure 36 après l'étape de codage des points usinables ;

La figure 38 montre le trajet de l'outil par passage par les points codés de la figure 37 ;

La figure 39 représente un quadrillage du même exemple de la figure 5, mais s'appliquant à un surfaçage contenant l'îlot et l'évidement ;

Les figures 40 et 41 représentent le tableau propre au profil de surfaçage selon l'exemple de la figure 39, après détermination des points limites (figure 40) et respectivement des points intérieurs et extérieurs (figure 41) du profil de surfaçage ;

La figure 42 représente le tableau résultat image du surfaçage ;

Les figures 43 et 44 représentent le tableau propre au profil d'îlot selon l'exemple de la figure 39, après détermination des points limites (figure 43) et respectivement des points intérieurs et extérieurs (figure 44) du profil d'îlot ;

La figure 45 représente le tableau résultat image du surfaçage avec l'îlot ;

Les figures 46 et 47 représentent le tableau propre au profil d'évidement selon l'exemple de la figure 39, après détermination des points limites (figure 46) et respectivement des points intérieurs et extérieurs (figure 47) du profil d'évidement ;

La figure 48 représente le tableau résultat image du surfaçage avec l'îlot et l'évidement ;

La figure 49 représente le tableau résultat de la figure 48 après l'étape de déport des profils ;

La figure 50 représente le tableau résultat de la figure 49, mais de résolution divisée par deux ;

La figure 51 représente le tableau résultat de la figure 50 après l'étape de codage des points usinables ; et

La figure 52 montre le trajet de l'outil par passage par les points codés de la figure 51.

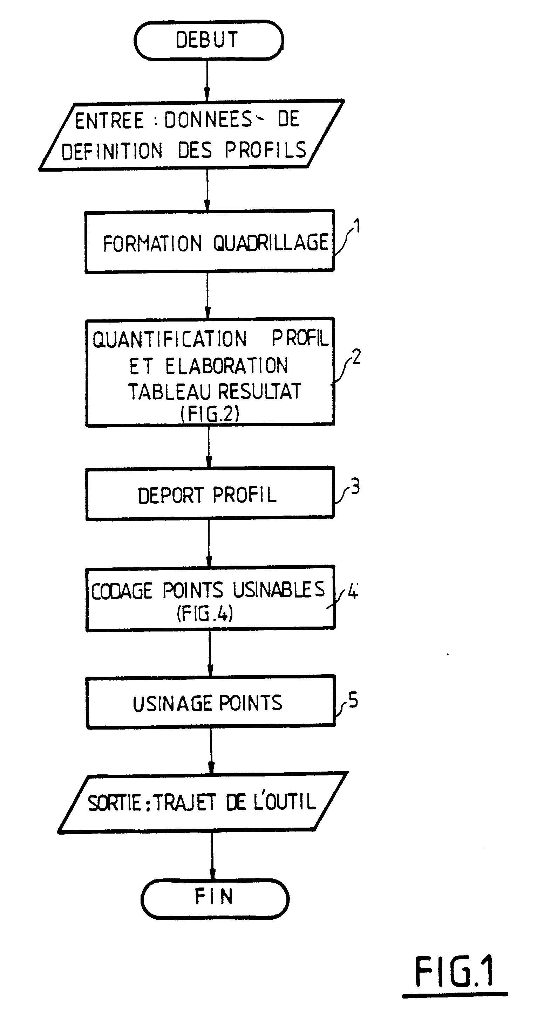

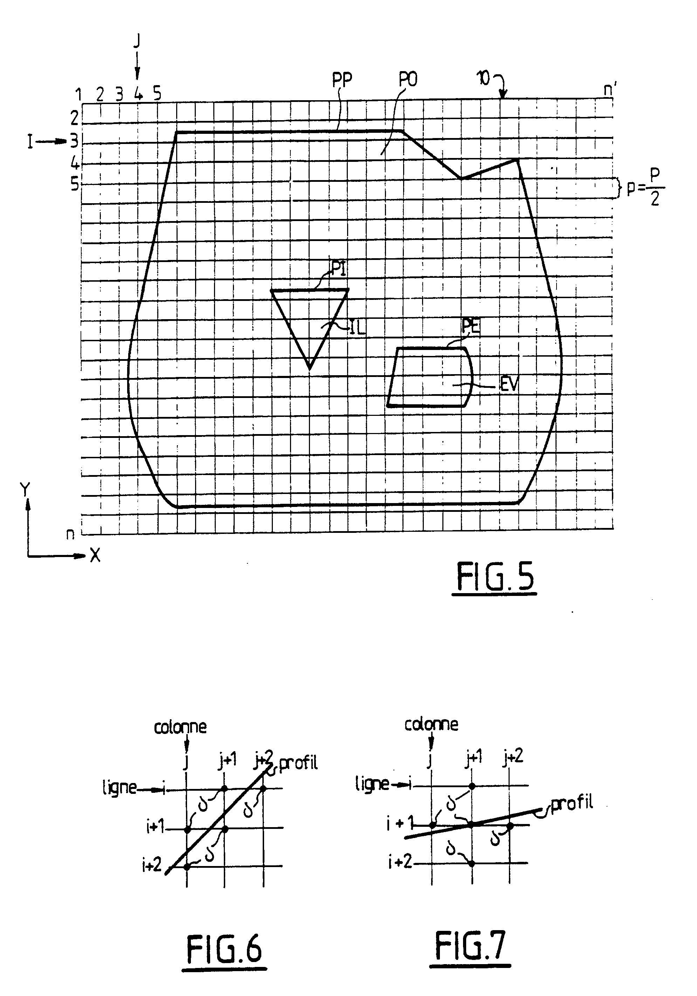

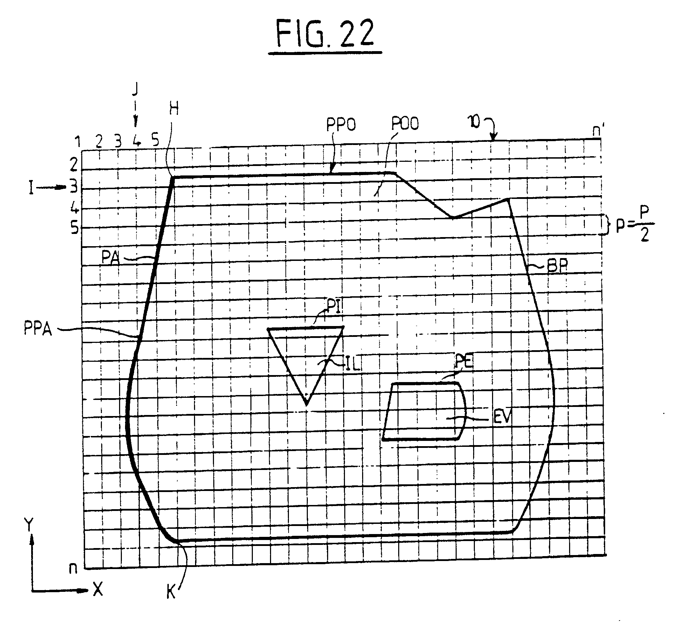

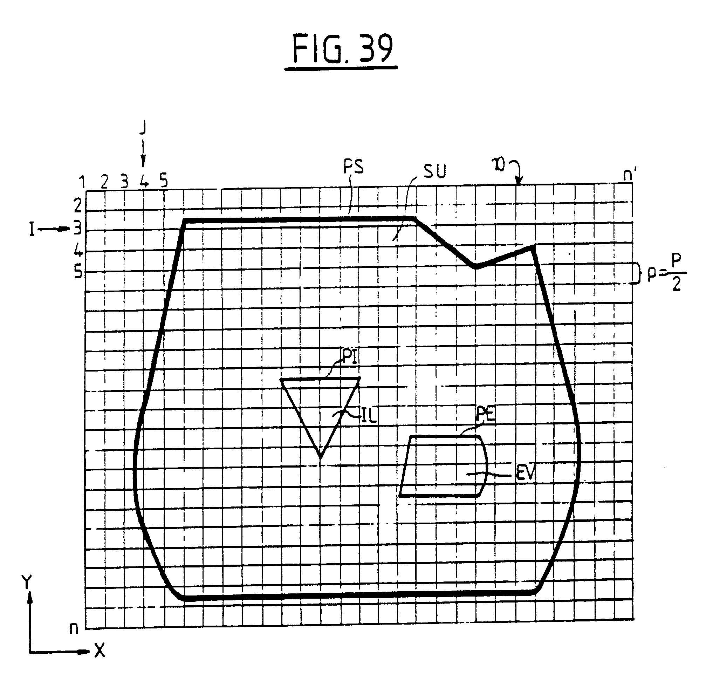

La figure 1 montre sous forme d'organigramme l'organisation générale des principales étapes du procédé de détermination automatique du trajet d'outil, conforme à l'invention, lors d'un usinage plan d'une poche (sous-entendu fermée), d'une poche ouverte ou d'un surfaçage. Pour faciliter la description, on décrira tout d'abord en détail successivement chacune des étapes du processus en relation avec un exemple de poche contenant un îlot et un évidement, tel qu'illustré à la figure 5, et on reprendra ensuite de façon plus succincte le même processus en relation avec le même exemple de la figure 5, mais appliqué dans un premier temps à une poche ouverte contenant l'îlot et l'évidement (figure 22) et dans un deuxième temps à un surfaçage contenant l'îlot et l'évidement (figure 39). Bien entendu, cet exemple (figures 5, 22, 39) est donné uniquement à titre illustratif et nullement limitatif.

Dans l'exemple de la figure 5, on a désigné par PP, PI et PE les trois profils ou contours extérieurs respectivement de la poche PO, de l'îlot IL et de l'évidement EV. Chacun de ces trois profils est défini dans un même programme "PIECE" et est constitué d'une succession de segments de droite et/ou d'arcs de cercle.

La première étape du procédé selon l'invention, repérée en 1 sur la figure 1, consiste à former un quadrillage 10 (figure 5) qui s'étend dans un plan (X-Y) sur toute la poche PO suivant un même pas, noté p, de lignes et de colonnes.

Le pas p du quadrillage est, de préférence, choisi égal à la moitié de la prise de passe d'usinage, laquelle prise de passe, notée P, doit être inférieure à $D / \sqrt{2}$, D étant le diamètre de l'outil, en vue d'obtenir un trajet de l'outil qui soit constitué d'une succession de déplacements linéaires orientés, soit parallèlement aux axes X et Y, soit à 45° par rapport à ces axes.

Le quadrillage 10 est donc construit avec des axes parallèles à X et Y et un pas p égal à P'2 ; les dimensions maximales du quadrillage sont calculées en fonction des dimensions extrêmes de la poche de façon à ce que le quadrillage s'étende sur toute la poche. Chacun des sommets du quadrillage 10 est repéré par un indice ligne I allant de 1 à n, n étant le nombre de lignes, et par un indice colonne J allant de 1 à n', n' étant le nombre de colonnes.

L'étape suivante, repérée en 2 sur la figure 1, consiste à la fois à quantifier ou discrétiser successivement chacun des trois profils considérés PP, PI et PE, et à élaborer un tableau, dit tableau résultat, qui est une image de la zone réelle à usiner formée par la poche PO à l'exclusion de l'îlot IL et de l'évidement EV.

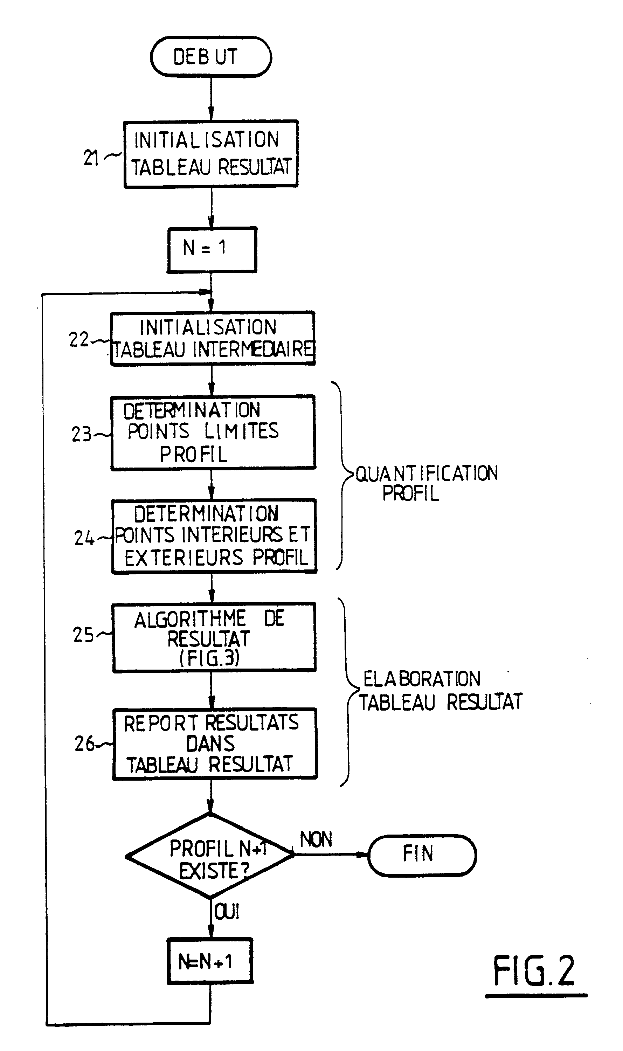

Selon un mode d'exécution préféré, cette étape répond à l'organigramme de traitement illustré à la figure 2 que l'on va maintenant décrire en précisant au préalable que cet organigramme, au niveau de son algorithme de résultat auquel il fait appel, permet avantageusement de traiter successivement les trois profils considérés dans n'importe quel ordre. A titre d'exemple, on traitera en premier lieu le profil de poche PP, en second lieu le profil d'îlot PI et enfin le profil d'évidement PE (figure 5).

D'après l'organigramme de la figure 2, pour le premier profil considéré (N = 1, N étant le numéro du profil), ici le profil de poche PP, la première opération 23 consiste, en partant du quadrillage 10 précédemment formé (figure 5), à déterminer par leurs indices respectifs de ligne et de colonne des points appelés points limites du profil de poche PP. Ces points limites sont les sommets du quadrillage les plus proches du profil de poche PP et ils sont obtenus en recherchant pour chaque ligne et chaque colonne du quadrillage 10 les intersections avec le profil PP.

D'une manière générale, comme le montrent les figures 6 et 7, les points limites, notés ò, sont les deux sommets du quadrillage les plus proches de l'intersection si celle-ci se trouve entre deux sommets (figure 6) ou les cinq sommets du quadrillage les plus proches de l'intersection si celle-ci est confondue avec un sommet (figure 7).

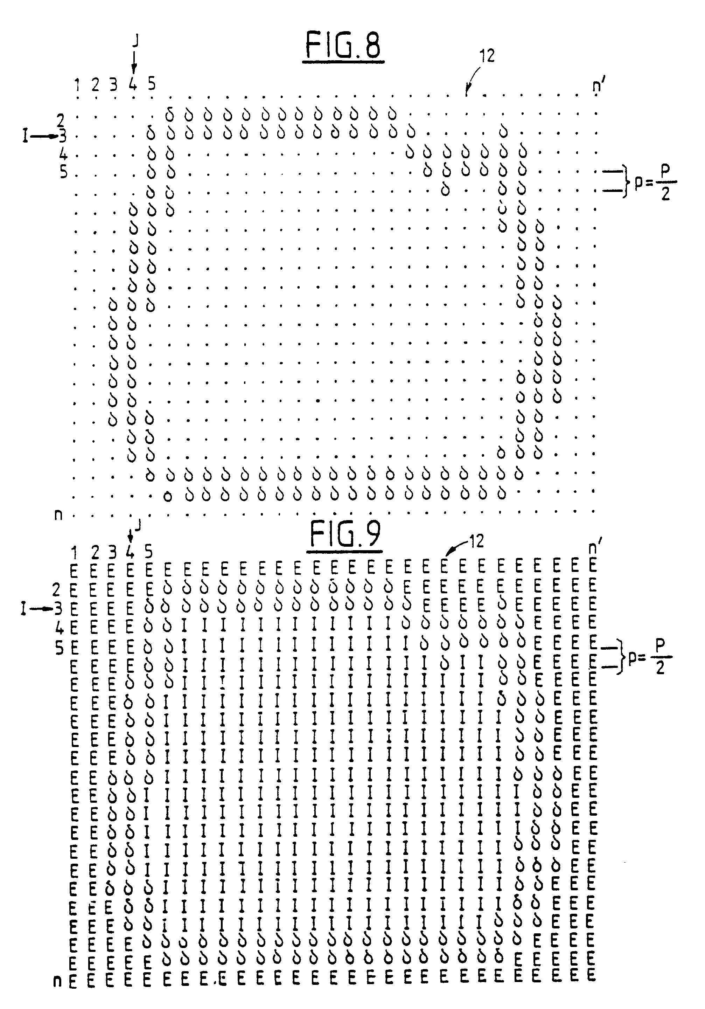

Après détermination des points limites ò du profil de poche PP, ceux-ci sont reportés, aux mêmes emplacements indicés de ligne et de colonne que ceux du quadrillage, dans un tableau intermédiaire 12, figure 8, de mêmes dimensions et de même pas p que le quadrillage 10 ; le tableau intermédiaire 12 est préalablement initialisé à vide (opération 22 sur la figure 2).

L'opération suivante 24 (figure 2) consiste, en partant toujours du quadrillage 10, à déterminer par leurs indices respectifs de ligne et de colonne des points intérieurs et des points extérieurs du profil de poche PP qui sont les sommets du quadrillage laissés inoccupés par les points limites précédemment déterminés.

Tous les points de la première et de la dernière ligne, de la première et de la dernière colonne du quadrillage 10 sont des points extérieurs, par définition du quadrillage. Tous les autres points extérieurs du profil de poche PP sont alors déterminés en partant d'un point extérieur donné et en appliquant l'algorithme connu du labyrinthe dont une explication est fournie dans le livre "Techniques algorithmiques pour l'intelligence artificielle" de M. GRIFFITHS, pages 40 à 43.

De même, connaissant un point intérieur du profil de poche PP, tous les autres points intérieurs du profil sont déterminés par application du susdit algorithme du labyrinthe.

Après détermination des points intérieurs et des points extérieurs du profil de poche PP, notés respectivement I et E, ceux-ci sont reportés, aux mêmes emplacements indicés de ligne et de colonne que ceux du quadrillage, dans le tableau intermédiaire 12 propre au profil de poche PP, comme visible sur la figure 9.

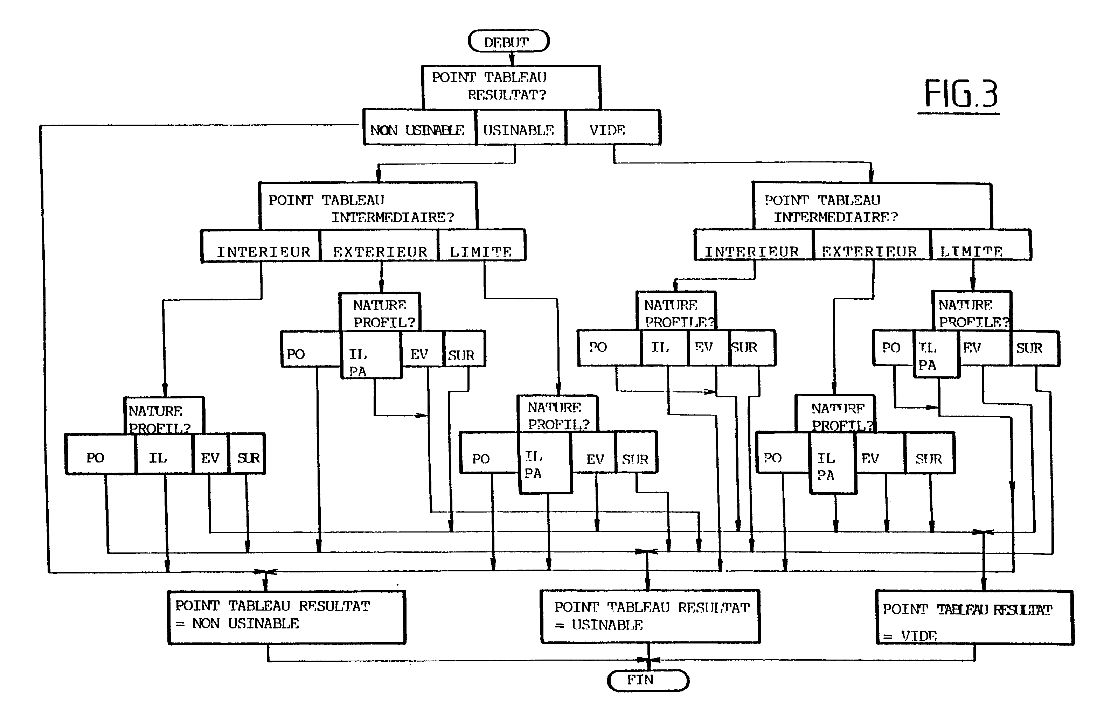

L'opération suivante 25 (figure 2) consiste à appliquer un algorithme de résultat, tel qu'illustré à la figure 3, qui permet de façon générale, connaissant l'état précédent - "usinable", "non usinable" ou "vide" - pris par chacun des points d'un tableau, dit tableau résultat, de mêmes dimensions et de même pas p que le tableau intermédiaire 12, de déterminer l'état résultant - "usinable", "non usinable" ou "vide" - que prend chacun de ces points du tableau résultat en fonction de la nature du profil en cours de traitement - ici poche, îlot ou évidement - et du type - limite, intérieur ou extérieur - du point correspondant de même emplacement indicé dans le tableau intermédiaire propre au profil en cours de traitement.

Après application de cet algorithme, l'opération suivante 26 (figure 2) consiste à reporter chacun des états résultants précédemment déterminés, à leurs mêmes emplacements indicés respectifs de ligne et de colonne, dans le tableau résultat en l'occurrence sous la forme :
- d'un même premier caractère donné, par exemple la valeur 1, si l'état résultant est un état "usinable", et ce, quel que soit le profil considéré ;
- d'un même deuxième caractère donné différent du premier, par exemple la valeur 0, si l'état résultant est un état "non usinable" dans le cas où le profil considéré est le profil de poche ;
- d'un même troisième caractère donné différent du deuxième, par exemple la valeur 2, si l'état résultant est un état "non usinable" dans le cas où le profil considéré est le profil d'îlot ;
- d'un même quatrième caractère donné différent du troisième, par exemple la valeur 3, si l'état résultant est un état "vide" dans le cas où le profil considéré est le profil d'évidement.

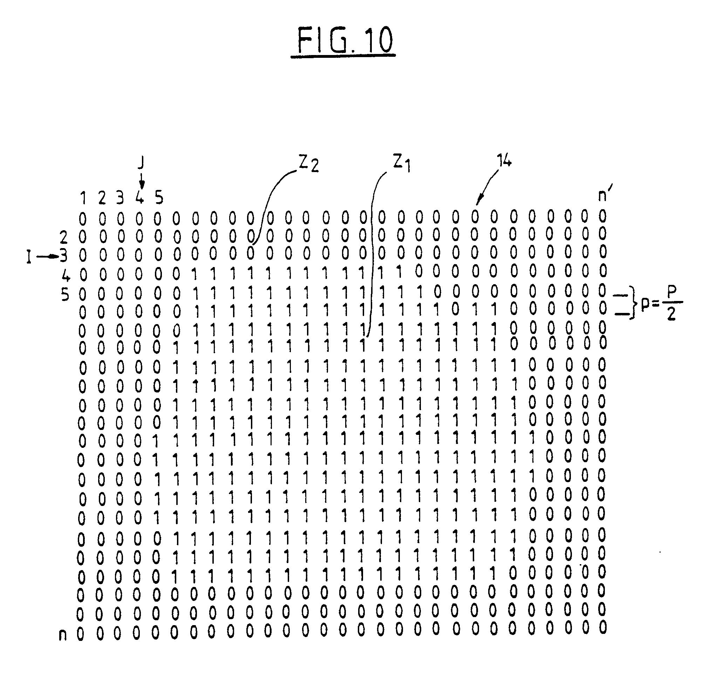

Dans l'exemple de la figure 5 dans lequel le profil de poche PP est traité en premier, le tableau résultat désigné par la référence générale 14 sur la figure 10 est tout d'abord initialisé (opération 21 sur la figure 2) en mettant tous ses points à l'état "usinable" représenté par la valeur 1. Par application de l'algorithme de résultat, figure 3, chacun des points usinables 1 du tableau résultat initialisé, soit reste un point usinable 1 si le point correspondant dans le tableau intermédiaire 12 (figure 9) propre au profil de poche PP est un point intérieur I, soit devient un point non usinable 0 si le point correspondant dans ledit tableau 12 est un point limite ò ou un point extérieur E. En fin de traitement du profil de poche PP, comme le montre la figure 10, le tableau résultat 14 obtenu se compose d'une première zone $Z_1$ représentative de la poche PO et formée des points usinables 1 et d'une deuxième zone $Z_2$, extérieure à la première, formée des points non usinables 0.

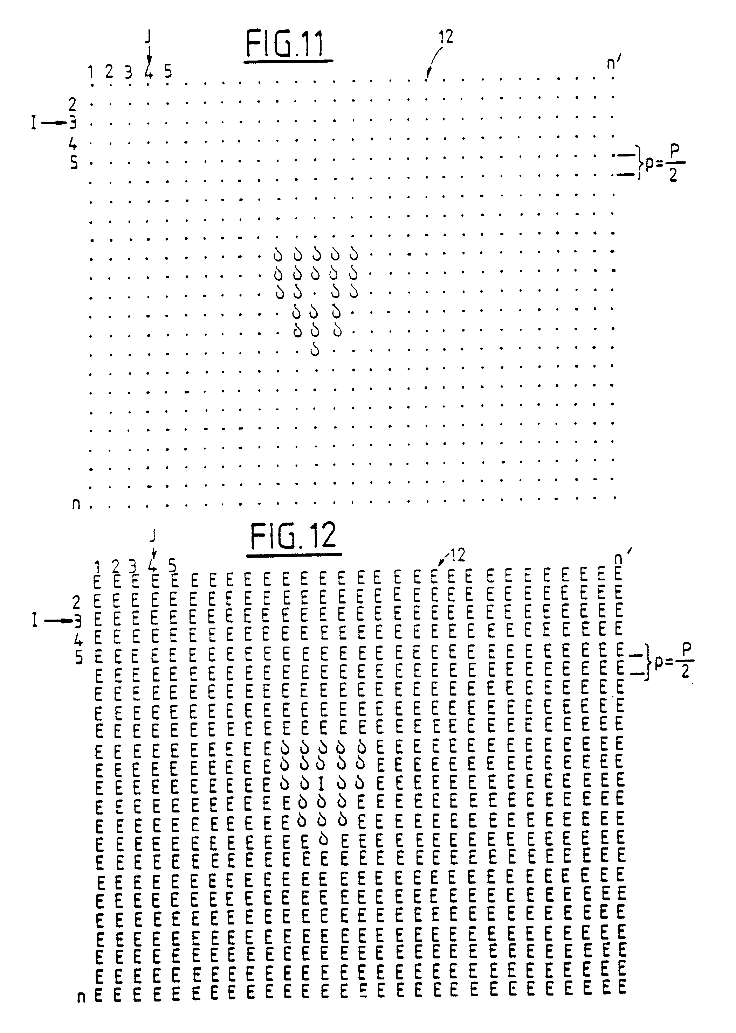

Pour le deuxième profil considéré, ici le profil d'îlot PI (figure 5), après avoir de nouveau initialisé à vide le tableau intermédiaire 12, la détermination des points limites ò, des points intérieurs I et des points extérieurs E du profil d'îlot PI s'effectue à partir du quadrillage 10 d'une manière identique à celle précédemment décrite en relation avec le profil de poche PP. En référence à la figure 11, on a représenté le tableau intermédiaire 12 propre au profil d'îlot PI après détermination des points limites ò, et à la figure 12, ce même tableau 12 après détermination des points intérieurs I et des points extérieurs E.

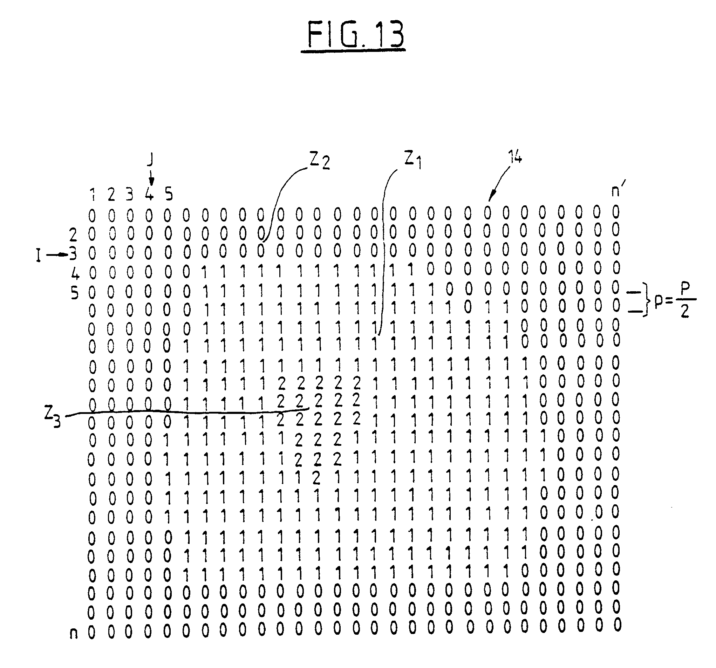

Par application de l'algorithme de résultat, figure 3, à partir du tableau résultat 14 précédemment obtenu (figure 10), chacun des points non usinables 0 de ce tableau résultat 14 reste un point non usinable 0, tandis que chacun des points usinables 1 dudit tableau, soit reste un point usinable 1 si le point correspondant dans le tableau intermédiaire 12 (figure 12) propre au profil d'îlot est un point extérieur E, soit devient un point non usinable 2 si le point correspondant dans ledit tableau 12 est un point limite ò ou un point intérieur I. En fin de traitement du profil d'îlot PI, comme le montre la figure 13, le tableau résultat 14 obtenu reproduit le tableau résultat 14 obtenu après traitement du profil de poche PP (figure 10), mais dans lequel apparaît dans la première zone $Z_1$ une troisième zone $Z_3$ représentative de l'îlot IL et formée des points non usinables 2.

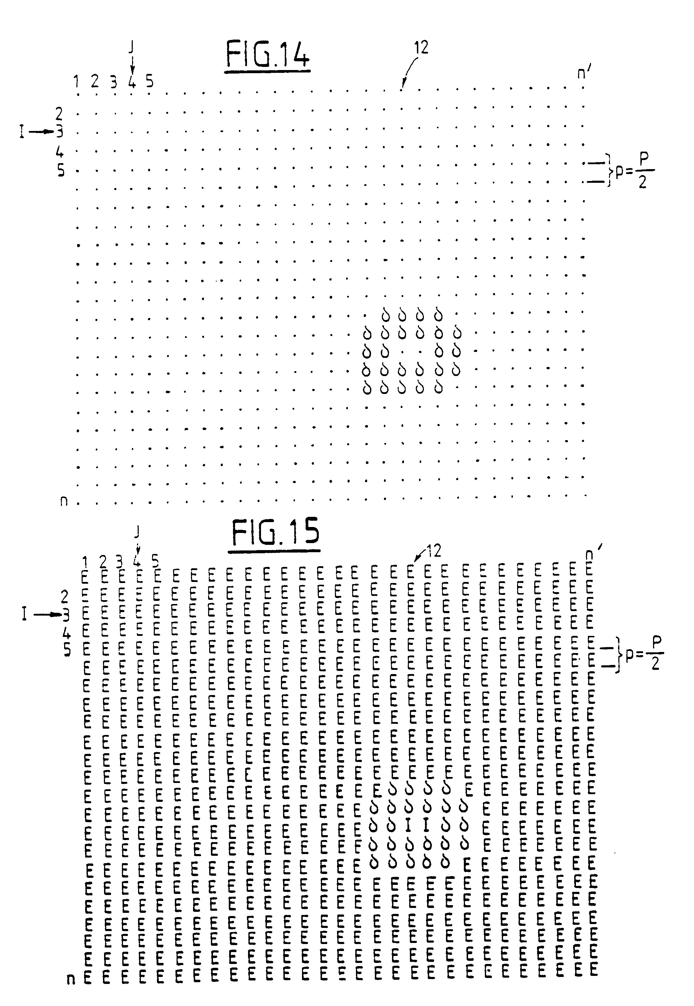

Enfin, pour le dernier profil considéré, ici le profil d'évidement PE (figure 5), après une nouvelle initialisation à vide du tableau intermédiaire 12, la détermination des points limites ò, des points intérieurs I et des points extérieurs E du profil d'évidement PE s'effectue à partir du quadrillage 10 d'une manière analogue à celle décrite précédemment en relation avec le profil de poche PP. On a représenté, figure 14, le tableau intermédiaire 12 propre au profil d'évidement PE après détermination des points limites ò, et figure 15, ce même tableau 12 après détermination des points intérieurs I et des points extérieurs E.

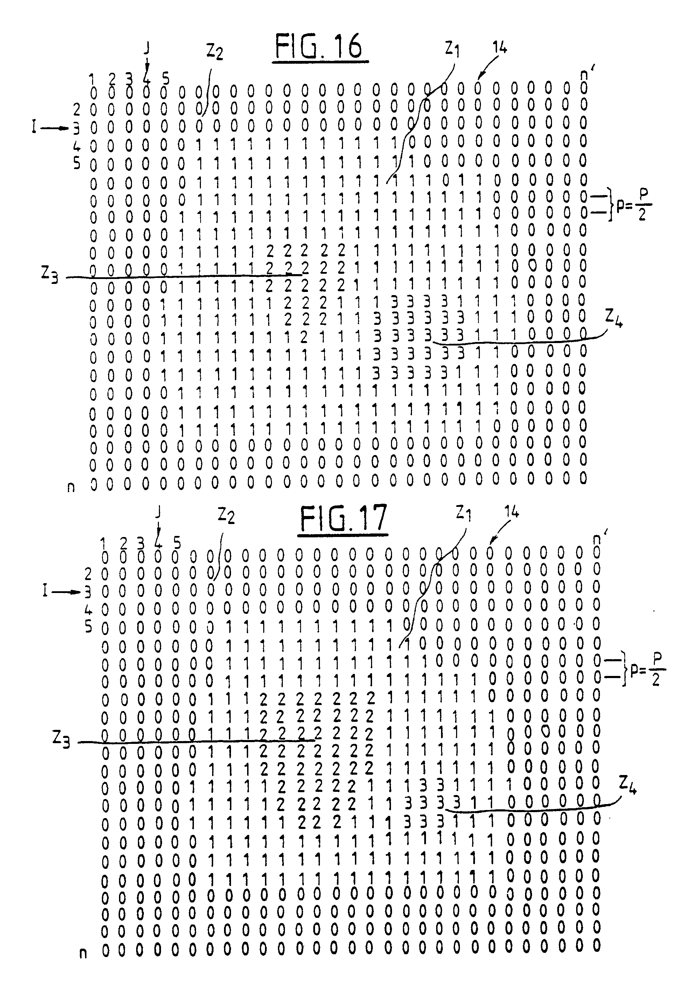

De nouveau, par application de l'algorithme de résultat, figure 3, à partir du tableau résultat 14 précédemment obtenu (figure 13), chacun des points non usinables 0 et 2 de ce tableau résultat 14 reste un point non usinable 0, respectivement 2, tandis que chacun des points usinables 1 dudit tableau, soit reste un point usinable 1 si le point correspondant dans le tableau intermédiaire 12 (figure 15) propre au profil d'évidement est un point extérieur E, soit devient un point vide 3 si le point correspondant dans ledit tableau 12 est un point limite ò ou un point intérieur I. En fin de traitement du profil d'évidement PE, comme le montre la figure 16, le tableau résultat 14 obtenu reproduit le tableau résultat 14 obtenu après traitement des profils de poche PP et d'îlot PI (figure 13), mais dans lequel apparaît dans la première zone $Z_1$ une quatrième zone $Z_4$ représentative de l'évidement EV et formée des points vides 3.

Ainsi, après traitement des profils de poche PP, d'îlot PI et d'évidement PE, le tableau résultat définitif 14, figure 16, se compose de quatre zones, à savoir : la zone $Z_1$ ensemble des points usinables 1 et incluant la zone $Z_3$ ensemble des points non usinables 2 représentatifs de l'îlot ainsi que la zone $Z_4$ ensemble des points vides 3 représentatifs de l'évidement, et la zone $Z_2$, extérieure à la zone $Z_1$, ensemble des points non usinables 0. Ce tableau résultat 14 constitue donc une image de la zone réelle à usiner, en l'espèce la zone $Z_1$.

Il convient de noter que le tableau résultat définitif 14, figure 16, peut être obtenu quel que soit l'ordre de traitement des trois profils considérés grâce à l'algorithme de résultat de la figure 3, le tableau résultat étant préalablement initialisé à l'état "usinable". Néanmoins, cet algorithme de résultat pourrait être facilement modifié pour imposer, si nécessaire, de traiter le profil extérieur (poche) avant les deux profils intérieurs (îlot et évidement) ; dans ce cas, l'initialisation du tableau résultat s'effectuerait en mettant tous ses points à l'état "vide".

Par ailleurs, on relève qu'en cas d'usinage plan d'une poche seule, c'est-à-dire sans îlot et sans évidement, ou d'une poche uniquement avec îlot, le traitement des profils de poche et d'îlot ne fait alors appel qu'à une application particulière de l'algorithme de résultat de la figure 3, l'état "vide" du tableau résultat étant dépourvu de tout intérêt d'autant plus que le tableau résultat est initialisé à l'état "usinable" comme on l'a vu précédemment.

L'étape suivante du processus, repérée en 3 sur la figure 1, consiste à effectuer un déport de la zone à usiner, ici la zone $Z_1$ du tableau résultat 14 précédemment élaboré (figure 16), par élimination de ladite zone des points usinables 1 qui sont interdits à l'axe de l'outil, c'est-à-dire les points distants des limites-matière (bord de poche et îlot) de moins d'un rayon d'outil.

Cette élimination des points usinables consiste tout d'abord à déterminer pour chaque point non usinable tant de la zone $Z_2$ (points 0) que de la zone $Z_3$ (points 2), les points usinables 1 de la zone $Z_1$ dont la distance audit point non usinable est inférieure au rayon de l'outil, puis à transformer ces points usinables 1 en points non usinables 0 si le point non usinable analysé appartient à la zone $Z_2$ ou en points non usinables 2 si le point non usinable analysé appartient à la zone $Z_3$.

Lorsque la pièce comporte un évidement, comme dans l'exemple choisi (EV, figure 5), il est préférable pour des raisons mécaniques (rigidité de la pièce, bavures) d'effectuer également un déport vers l'intérieur de l'évidement par élimination des points vides 3 (figure 16) qui sont distants de la zone à usiner de moins d'un rayon d'outil.

Cette élimination des points vides consiste tout d'abord à déterminer pour chaque point usinable 1 de la zone $Z_1$ les points vides 3 de la zone $Z_4$ dont la distance audit point usinable est inférieure au rayon de l'outil, puis à transformer ces points vides 3 en points usinables 1.

On a représenté à la figure 17 le tableau résultat 14 à quatre zones modifiées $Z_1$, $Z_2$, $Z_3$ et $Z_4$ une fois le déport effectué, les zones $Z_1$ et $Z_4$ étant devenues plus petites au profit des zones $Z_1$ et $Z_3$.

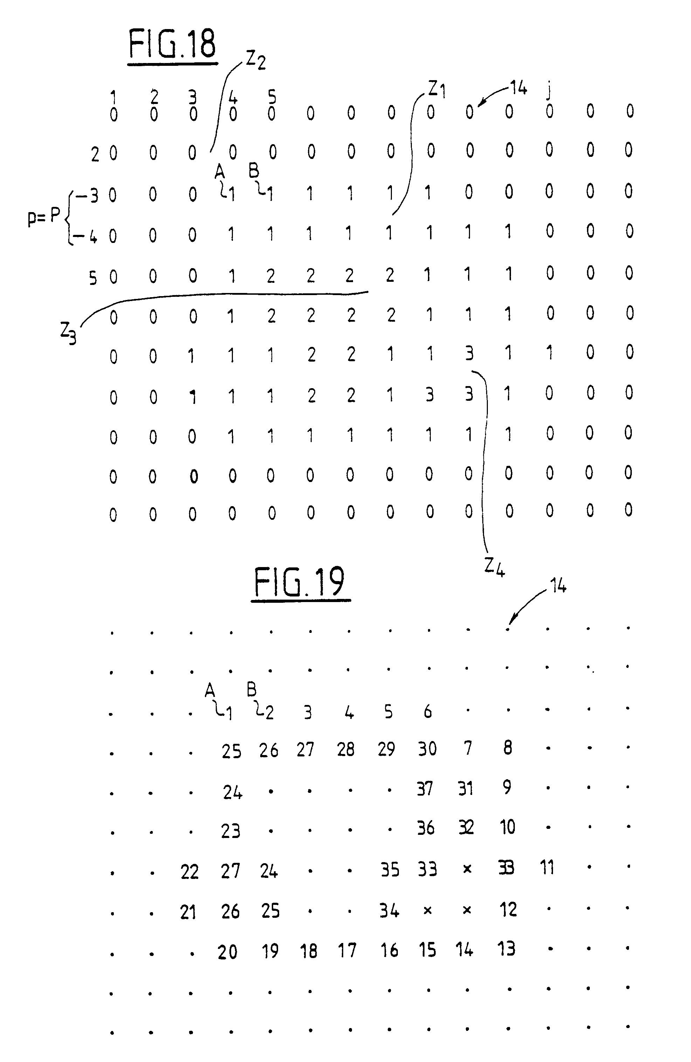

Comme on l'a vu précédemment, le tableau résultat 14 présente le même pas p que le quadrillage 10 (figure 5), lequel pas est égal à la moitié de la prise de passe P de l'usinage. Pour diminuer après le déport des profils le temps de traitement de chacune des étapes subséquentes du processus, il est prévu de traiter le tableau résultat 14 après déport (figure 17) en lui donnant un pas égal à la prise de passe P. Le passage du tableau résultat 14 après déport (figure 17) au tableau résultat 14 de pas P (figure 18) s'opère en ne prenant en compte qu'une ligne sur deux et une colonne sur deux, la première ligne et la première colonne du tableau résultat étant, de préférence dans cet exemple, soustraites en premier.

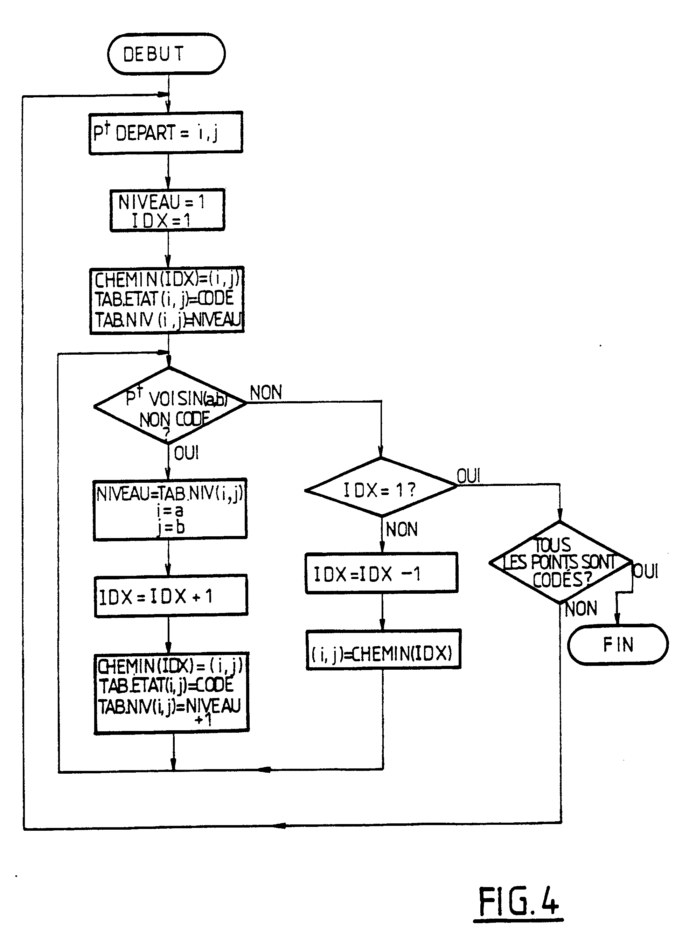

L'étape suivante, repérée en 4 sur la figure 1, consiste à coder les points usinables 1 de la zone $Z_1$ du tableau résultat 14 de la figure 18 en leur affectant des niveaux consécutifs représentés chacun par un entier positif, par mise en oeuvre d'un algorithme de codage que l'on va maintenant décrire en référence aux figures 4 et 18.

Selon cet algorithme, figure 4, le codage consiste tout d'abord à prendre en compte un point usinable quelconque de la zone $Z_1$ (figure 18), appelé point de départ, de coordonnées (i, j) et à lui affecter un niveau représenté par le nombre entier 1. Les indices i et j du point de départ sont empilés dans une pile où ils sont adressés par un même index IDX = 1.

De préférence, le point de départ du codage est situé près du bord de la poche ou de l'îlot. Dans le présent exemple, le point A (i = 3, j = 4) de la figure 18 est choisi comme point de départ situé près du bord de la poche et est codé en lui affectant le niveau 1, comme visible à la figure 19.

Le point suivant est un point voisin du point de départ A et situé sur la même ligne ou la même colonne que celui-ci. Dans l'exemple choisi, ce point est le point B situé sur la même ligne que le point A et ses indices (i = 3, j = 5) sont empilés dans ladite pile où ils sont adressés par l'index suivant IDX = 2 ; le point B est alors codé en lui affectant le niveau suivant 2, comme on le voit à la figure 19.

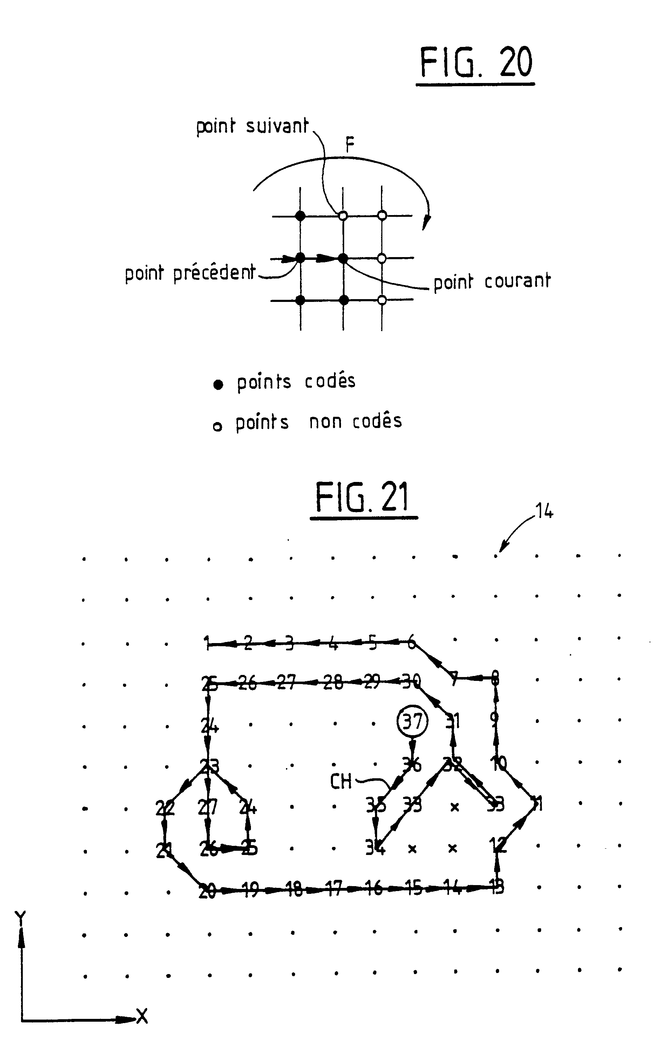

Pour passer ensuite d'un point courant codé de niveau n (index IDX) au point suivant, on recherche s'il existe parmi les voisins du point courant un point non codé. Comme le montre la figure 20, cette recherche se fait en partant du point qui a été codé précédemment au point courant et en tournant autour du point courant dans un même sens de recherche prédéterminé, constant pour tout le codage, tel que, par exemple, le sens horaire figuré par la flèche F.

Si le point non codé existe, ses indices i = a et j = b sont empilés dans la pile où ils sont adressés par l'index suivant incrémenté d'une unité, soit IDX = IDX + 1 ; ce point constitue donc le point suivant qui est alors codé en lui affectant le niveau n + 1 (entier positif). Ce point devient donc le point courant et le codage continue.

Par contre, si le point non codé n'existe pas, l'algorithme incorpore la marche arrière consistant à désempiler successivement les indices i et j suivant une décrémentation d'une unité de l'index IDX, soit IDX = IDX - 1, jusqu'à trouver un point codé qui ait au moins un voisin non codé ; ce point est alors le point courant et le codage continue d'une manière identique à celle explicitée précédemment.

La fin du codage intervient lorsque l'on a fait marche arrière jusqu'au point de départ A de niveau 1 (index IDX = 1) et que celui-ci n'a plus de voisin non codé.

On a représenté à la figure 19 le tableau résultat 14 après codage de tous les points usinables par application de l'algorithme décrit ci-dessus.

La dernière étape du processus, repérée en 5 sur la figure 1, consiste à usiner les points précédemment codés en déterminant le trajet ou chemin que doit suivre l'outil par passage par chacun de ces points suivant une succession de déplacements linéaires orientés, soit parallèlement aux axes X et Y, soit à 45° par rapport à ceux-ci.

Cet usinage des points codés fait appel à l'algorithme suivant :

Au départ, tous les points codés sont spécifiés "non usinés".

On commence par choisir comme point de fin d'usinage le point de départ de codage, ici le point codé ayant le niveau 1 (figure 19), lui-même choisi comme point situé près du bord de la poche, et comme point de début d'usinage le point codé ayant le niveau le plus haut, en l'occurrence le point de niveau 37 (figure 19).

Pour passer ensuite d'un point courant au point suivant, on recherche parmi ses voisins le point "non usiné" de plus haut niveau et on détermine si ce niveau est inférieur ou supérieur à celui du point courant.

Dans le premier cas, le point courant est considéré comme un point "usiné" sur lequel l'outil ne repasse pas.

Dans le deuxième cas, le point courant est considéré comme un point "en attente", c'est-à-dire un point physiquement usiné mais sur lequel l'outil peut repasser.

La fin de l'usinage intervient lorsque le point codé de niveau 1 est un point "usiné".

On a représenté à la figure 21 le tableau résultat 14 dans lequel est tracé le chemin CH de l'outil obtenu par application de l'algorithme d'usinage décrit ci-dessus.

Dans cet exemple, figure 21, on notera que le point de niveau 32 est tout d'abord un point "en attente", puis devient un point "usiné" après passage par le point de niveau 33 ; de même, le point de niveau 23 est tout d'abord un point "en attente", puis devient un point "usiné" après passage par les points de niveaux respectifs 27, 26, 25 et 24, l'outil poursuivant ensuite son chemin par le point de niveau 22.

Il est à noter que dans cet exemple, un seul perçage est effectué pour engager l'outil dans la zone à usiner, ici au point de niveau 37. D'une manière générale, avantageusement, une seule opération de perçage suffit à condition que la zone à usiner ne possède pas d'étranglement inférieur au diamètre de l'outil.

Une fois l'usinage terminé, un contournage de finition, précédé éventuellement d'un contournage de semi-finition, est effectué autour de la poche et de l'îlot.

En se reportant aux figures 22 à 38, on va maintenant reprendre le même processus décrit précédemment en relation avec l'exemple de la figure 5 (poche contenant un îlot et un évidement), en reprenant le même exemple appliqué cette fois, en référence a la figure 22, à une poche dite ouverte notée POO contenant l'îlot IL (de profil PI) et l'évidement EV (de profil PE).

Dans l'exemple de la figure 22, la poche ouverte POO est délimitée extérieurement par une paroi PA définie entre les deux points H et K, à gauche de ceux-ci sur la figure 22, et délimitant une région de matière à ne pas usiner et par un bord BP de contour extérieur de la pièce. Sur cette figure 22, on a désigné par le repère général PPO le profil extérieur global de la poche ouverte POO dans le plan (X-Y), comprenant le profil de la paroi de ladite poche et le profil de bord extérieur de la pièce.

Le profil extérieur global PPO de la poche ouverte POO ainsi que les profils PI de l'îlot IL et respectivement PE de l'évidement EV, sont chacun définis dans un même programme "PIECE" et sont chacun constitués d'une succession de segments de droite et/ou d'arcs de cercle.

Conformément à la première étape du procédé selon l'invention, on forme le quadrillage 10, figure 22, s'étendant dans le plan (X-Y) sur toute la poche ouverte POO d'une manière identique à celle décrite précédemment en relation avec l'exemple de la figure 5 (poche avec îlot et évidement).

On effectue ensuite la quantification successivement de chacun des profils de poche ouverte, d'îlot et d'évidement, et l'élaboration du tableau dit tableau résultat qui est l'image de la zone réelle à usiner.

Dans le cas de la poche ouverte POO, figure 22, la quantification de son profil s'effectue en deux temps : tout d'abord, on prend en compte son profil extérieur global PPO que l'on considère comme un profil de surfaçage, c'est-à-dire délimité extérieurement par le contour de la pièce, puis on prend en compte son profil de paroi, noté PPA sur la figure 22, que l'on considère comme un profil d'îlot d'épaisseur nulle.

Ainsi, le tableau résultat s'élabore après quantification de chacun des quatre profils considérés, à savoir : le profil extérieur global PPO de la poche ouverte POO, le profil de paroi PPA de ladite poche ouverte, le profil d'îlot PI et le profil d'évidement PE, et ce, dans n'importe quel ordre de traitement. A titre d'exemple, on traitera en premier lieu le profil extérieur global PPO de la poche ouverte, en second lieu le profil d'îlot PI, en troisième lieu le profil d'évidement PE et enfin le profil de paroi PPA de la poche ouverte.

D'après l'organigramme de la figure 2, pour le premier profil considéré, ici le profil extérieur global

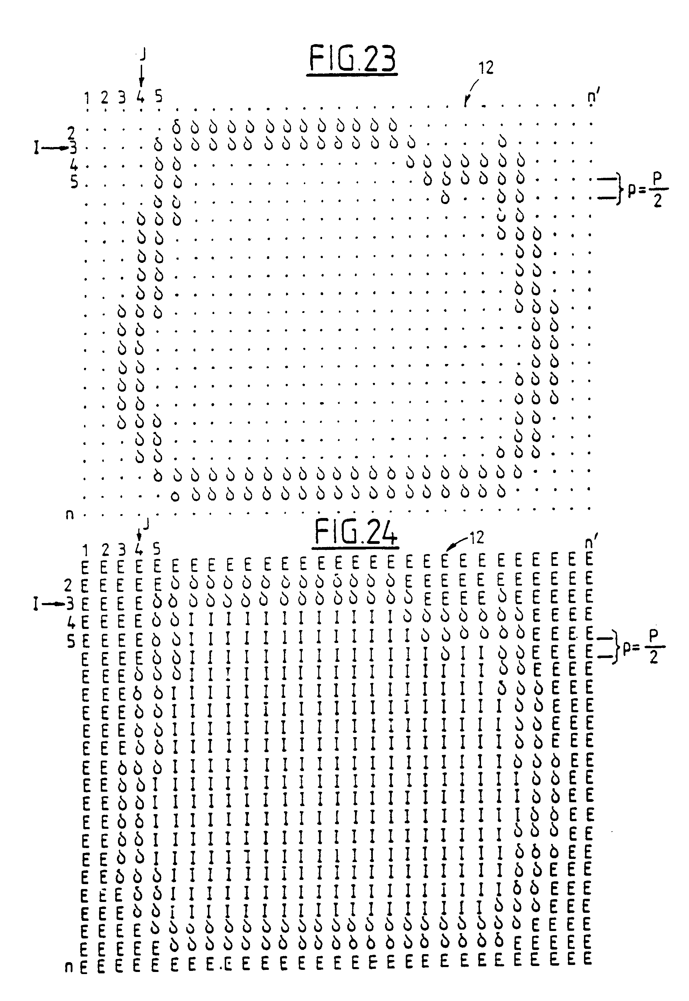

PPO de la poche ouverte POO (figure 22), et en partant du quadrillage 10, on détermine d'une manière identique à celle décrite précédemment en relation avec l'exemple de la figure 5 (poche avec îlot et évidement), d'une part, les points limites ∂ du profil extérieur global PPO de la poche ouverte POO, lesquels points limites ∂ étant ensuite reportés, comme précédemment, dans le tableau intermédiaire 12 (figure 23) préalablement initialisé à vide, d'autre part, les points intérieurs I et extérieurs E du profil extérieur global PPO de la poche ouverte en les reportant ensuite dans le tableau intermédiaire 12 propre au profil extérieur global PPO de la poche ouverte, comme visible à la figure 24.

Toujours d'après l'organigramme de la figure 2, on applique ensuite l'algorithme de résultat (figure 3) précédemment explicité, la nature du profil en cours de traitement dans l'exemple de la figure 22 étant un surfaçage pour le profil extérieur global de la poche ouverte, une paroi de la poche ouverte, un îlot ou un évidement, puis on reporte chacun des états résultants dans le tableau résultat en l'occurrence sous la forme :
- d'un même premier caractère donné, par exemple la valeur 1, si l'état résultant est un état "usinable", et ce, quel que soit le profil considéré ;
- d'un même deuxième caractère donné différent du premier, par exemple la valeur 0, si l'état résultant est un état "vide" dans le cas où le profil considéré est le profil extérieur global - surfaçage - de la poche ouverte ;
- d'un même troisième caractère donné différent du deuxième, par exemple la valeur 2, si l'état résultant est un état "non usinable" dans le cas où le profil considéré est le profil d'îlot ;
- d'un même quatrième caractère donné différent du troisième, par exemple la valeur 3, si l'état résultant est un état "vide" dans le cas où le profil considéré est le profil d'évidement ;
- d'un même cinquième caractère donné différent du quatrième, par exemple la valeur 4, si l'état résultant est un état "non usinable" dans le cas où le profil considéré est le profil de paroi de la poche ouverte.

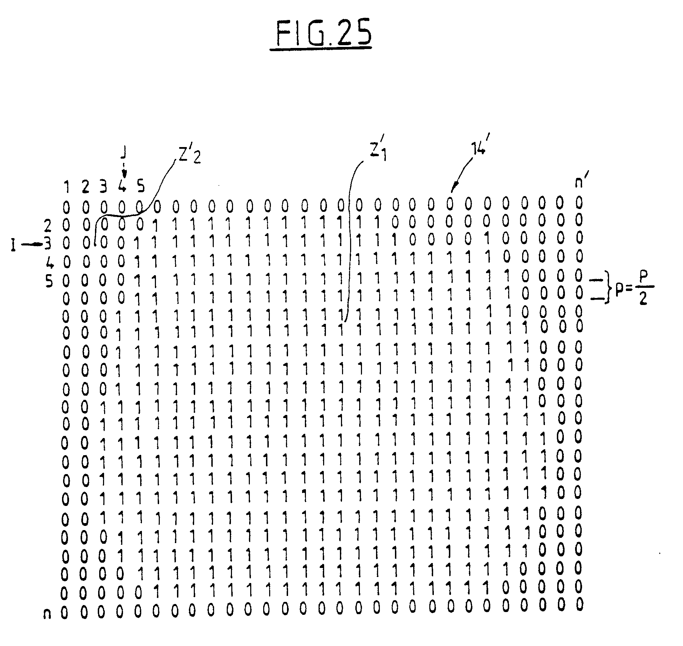

Dans l'exemple de la figure 22 dans lequel le profil extérieur global PPO de la poche ouverte est traité en premier, par application de l'algorithme de résultat (figure 3), et à partir d'un tableau résultat préalablement initialisé en mettant tous ses points à l'état "usinable" représenté par la valeur 1, chacun de ces points usinables 1 du tableau résultat soit reste un point usinable 1 si le point correspondant dans le tableau intermédiaire 12 (figure 24) propre au profil extérieur global de la poche ouverte est un point limite ∂ ou un point intérieur I, soit devient un point vide 0 si le point correspondant dans ledit tableau 12 est un point extérieur E. En fin de traitement du profil extérieur global PPO de la poche ouverte, comme le montre la figure 25, le tableau résultat obtenu, désigné en 14', se compose d'une première zone $Z'_1$ représentative de la poche ouverte POO et formée des points usinables 1, et d'une deuxième zone $Z'_2$, extérieure à la première, formée des points vides 0.

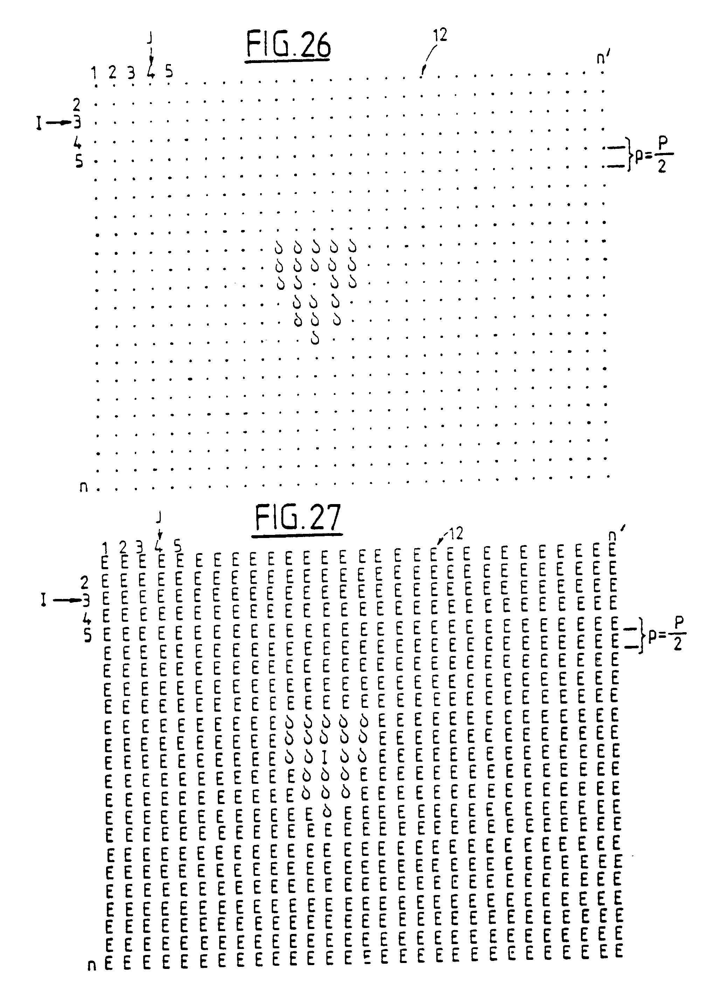

Pour le deuxième profil considéré, ici le profil d'îlot PI (figure 22), la détermination des points limites ∂, des points intérieurs I et des points extérieurs E du profil d'îlot s'effectue à partir du quadrillage 10 d'une manière identique à celle décrite en relation avec l'exemple de la figure 5. En référence à la figure 26, on a représenté le tableau intermédiaire 12 propre au profil d'îlot PI après détermination des points limites ∂, et à la figure 27, ce même tableau 12 après détermination des points intérieurs I et des points extérieurs E.

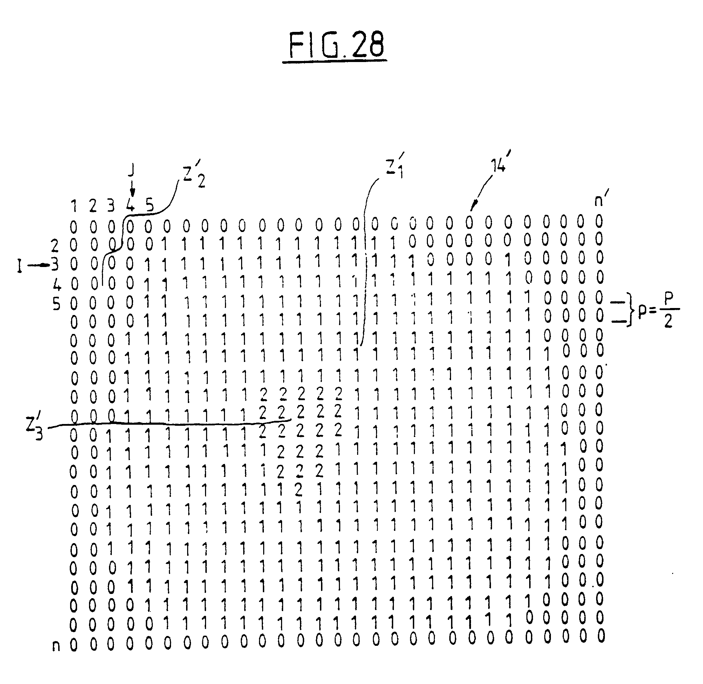

Par application de l'algorithme de résultat, figure 3, à partir du tableau résultat 14' précédemment obtenu (figure 25), chacun des points vides 0 de ce tableau résultat 14' reste un point vide 0 si le point correspondant dans le tableau intermédiaire 12 (figure 27) propre au profil d'îlot est un point extérieur E, tandis que chacun des points usinables 1 dudit tableau résultat 14' soit reste un point usinable 1 si le point correspondant dans le tableau intermédiaire 12 (figure 27) propre au profil d'îlot est un point extérieur E, soit devient un point non usinable 2 si le point correspondant dans ledit tableau 12 est un point limite ∂ ou un point intérieur I. En fin de traitement du profil d'îlot PI, comme le montre la figure 28, le tableau résultat 14' obtenu reproduit le tableau résultat 14' obtenu après traitement du profil extérieur global PPO de la poche ouverte (figure 25), mais dans lequel apparaît dans la première zone $Z'_1$ une troisième zone $Z'_3$ représentative de l'îlot IL et formée des points non usinables 2.

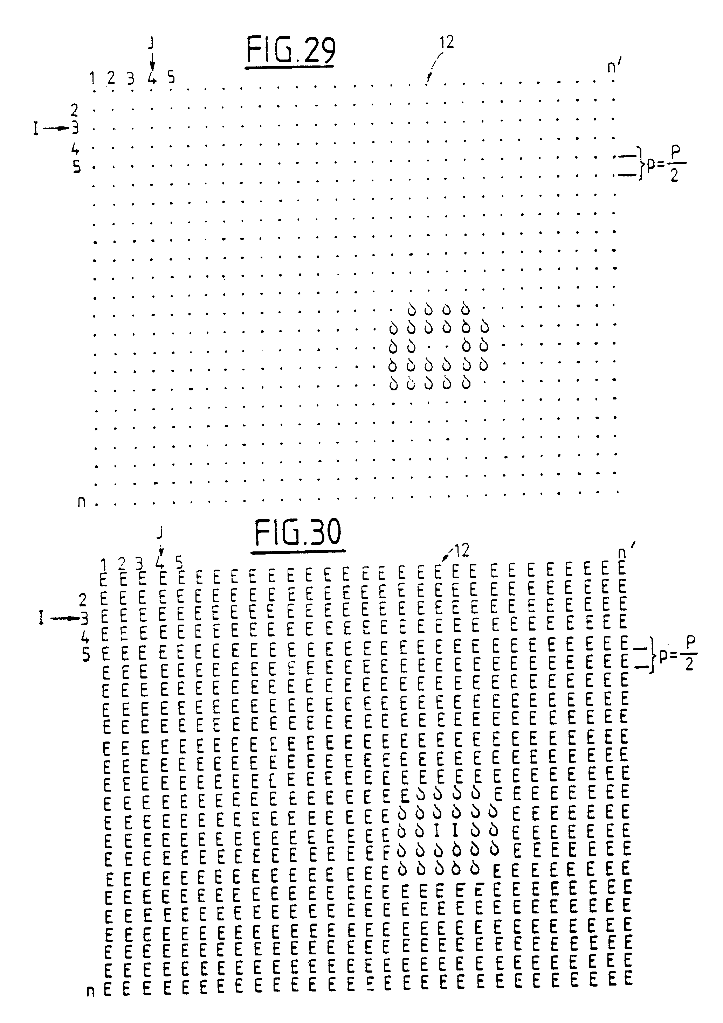

Pour le troisième profil considéré, ici le profil d'évidement PE (figure 22), la détermination des points limites ∂, des points intérieurs I et des points extérieurs E du profil d'évidement PE s'effectue à partir du quadrillage 10 d'une manière identique à celle décrite en relation avec l'exemple de la figure 5. On a représenté, figure 29, le tableau intermédiaire 12 propre au profil d'évidement PE après détermination des points limites ∂, et figure 30, ce même tableau 12 après détermination des points intérieurs I et des points extérieur E.

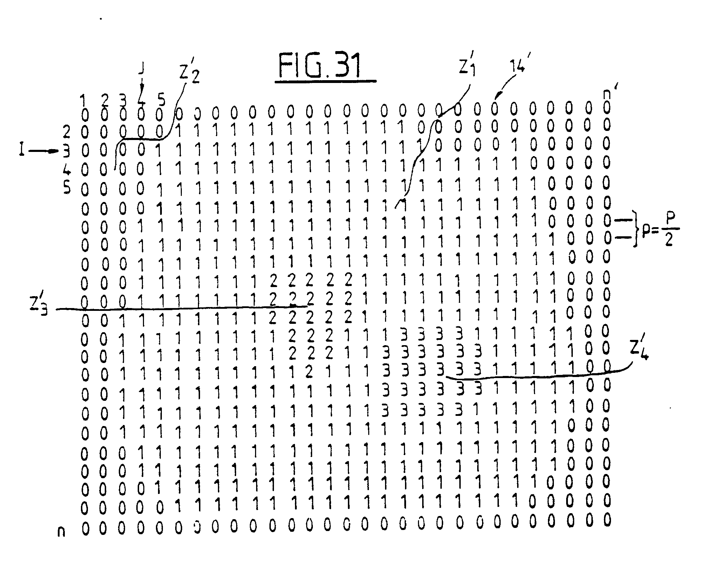

Par application de l'algorithme de résultat (figure 3), à partir du tableau résultat 14' précédemment obtenu (figure 28), chacun des points non usinables 2 de ce tableau résultat 14' reste un point non usinable 2, chacun des points vides 0 dudit tableau résultat 14' reste un point vide 0 si le point correspondant dans le tableau intermédiaire 12 (figure 30) propre au profil d'évidement est un point extérieur E, tandis que chacun des points usinables 1 dudit tableau résultat 14' soit reste un point usinable 1 si le point correspondant dans le tableau intermédiaire 12 (figure 30) propre au profil d'évidement est un point extérieur E, soit devient un point vide 3 si le point correspondant dans ledit tableau 12 est un point limite δ ou un point intérieur I. En fin de traitement du profil d'évidement PE, comme le montre la figure 31, le tableau résultat 14' obtenu reproduit le tableau résultat 14' obtenu après traitement du profil extérieur global PPO de la poche ouverte et du profil d'îlot PI (figure 28), mais dans lequel apparaît dans la première zone Z'₁ une quatrième zone Z'₄ représentative de l'évidement EV et formée des points vides 3.

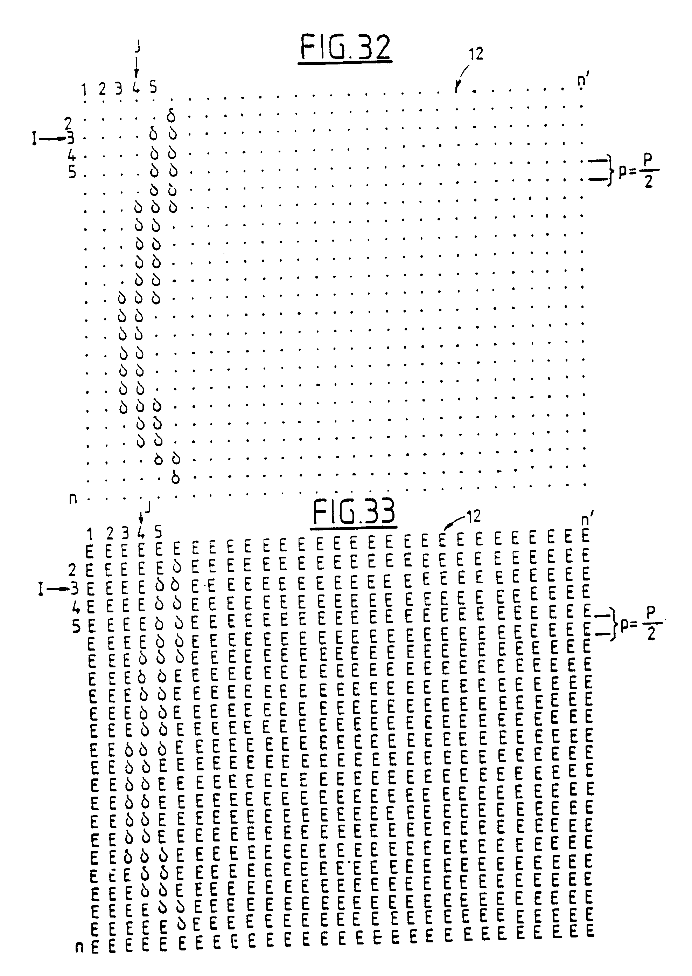

Enfin, pour le dernier profil considéré, ici le profil de paroi PPA de la poche ouverte (figure 22), la détermination des points limites δ s'effectue à partir du quadrillage 10 de la même façon que dans le cas d'un îlot. On a représenté, figure 32, le tableau intermédiaire 12 propre au profil de paroi PPA de la poche ouverte après détermination des points limites δ.

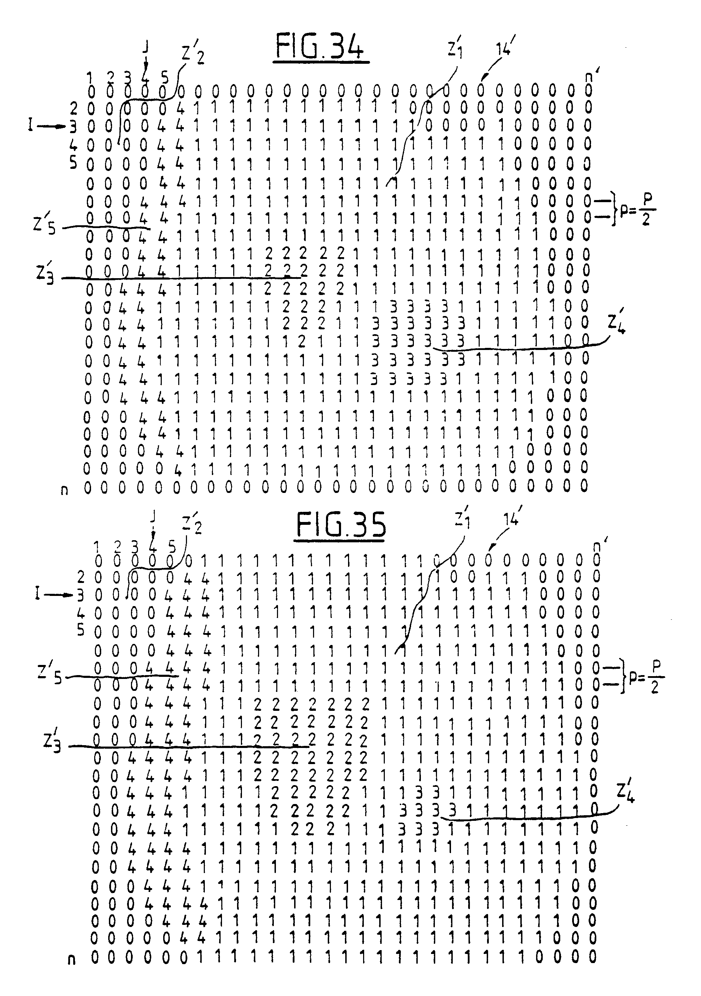

Etant donné que la paroi de la poche ouverte est considérée comme un îlot d'épaisseur nulle, aucun point intérieur n'existe et la détermination des points extérieurs E situés de part et d'autre de ladite paroi de la poche ouverte s'effectue comme précédemment, lesquels points extérieurs E étant les sommets du quadrillage laissés inoccupés par les points limites δ. Sur la figure 33, on a représenté le tableau intermédiaire 12 propre au profil de paroi PPA de la poche ouverte après détermination des points extérieurs E.

De nouveau, par application de l'algorithme de résultat (figure 3), à partir du tableau résultat 14' précédemment obtenu (figure 31), chacun des points non usinables 2 de ce tableau résultat 14' reste un point non usinable 2, chacun des points vides 0 et 3 dudit tableau résultat 14' reste un point vide 0 et, respectivement, 3, si le point correspondant dans le tableau intermédiaire 12 (figure 33) propre au profil de paroi de la poche ouverte est un point extérieur E, tandis que chacun des points usinables 1 dudit tableau résultat 14' soit reste un point usinable 1 si le point correspondant dans le tableau intermédiaire 12 (figure 33) propre au profil de paroi de la poche ouverte est un point extérieur E, soit devient un point non usinable 4 si le point correspondant dans ledit tableau 12 est un point limite δ. En fin de traitement du profil de paroi PPA de la poche ouverte, comme le montre la figure 34, le tableau résultat 14' obtenu reproduit le tableau résultat 14' obtenu après traitement du profil extérieur global PPO de la poche ouverte, du profil d'îlot PI et du profil d'évidement PE (figure 31), mais dans lequel apparaît en bordure de la première zone Z'₁ une cinquième zone Z'₅ représentative de la paroi PA de la poche ouverte et formée des points non usinables 4.

Ainsi, après traitement du profil extérieur global PPO de la poche ouverte, et des profils d'îlots PI, d'évidement PE et de paroi PPA de la poche ouverte, le tableau résultat définitif 14', figure 34, se compose de cinq zones, à savoir : la zone Z'₁ ensemble des points usinables 1, qui est bordée sur un côté par la zone Z'₅ ensemble des points non usinables 4 représentatifs de la paroi de la poche ouverte, et qui inclut la zone Z'₃ ensemble des points non usinables 2 représentatifs de l'îlot ainsi que la zone Z'₄ ensemble des points vides 3 représentatifs de l'évidement, et la zone Z'₂, extérieure aux zones Z'₁ et Z'₅, ensemble des points vides 0. Ce tableau résultat 14' constitue donc une image de la zone réelle à usiner, en l'espèce la zone Z'₁.

On effectue ensuite, à partir du tableau résultat 14' de la figure 34, un déport des profils du type déjà décrit, consistant :
- pour la zone Z'₅ (points non usinables 4), à éliminer les points usinables 1 de la zone Z'₁ dont la distance aux points non usinables 4 est inférieure au rayon de l'outil, puis à transformer ces points usinables 1 en points non usinables 4 ;
- pour la zone Z'₃ (points non usinables 2), à éliminer les points usinables 1 de la zone Z'₁ dont la distance aux points non usinables 2 est inférieure au rayon de l'outil, puis à transformer ces points usinables 1 en points non usinables 2 ;
- et ensuite, pour la zone Z'₁ (points usinables 1), à éliminer les points vides 0 de la zone Z'₂ ainsi que les points vides 3 de la zone Z'₄ dont la distance aux points usinables 1 est inférieure au rayon de l'outil, puis à transformer ces points vides 0 et 3 en points usinables 1.

On a illustré à la figure 35 le tableau résultat 14' aux cinq zones modifiées Z'₁, Z'₂, Z'₃, Z'₄ et Z'₅ une fois le déport effectué.

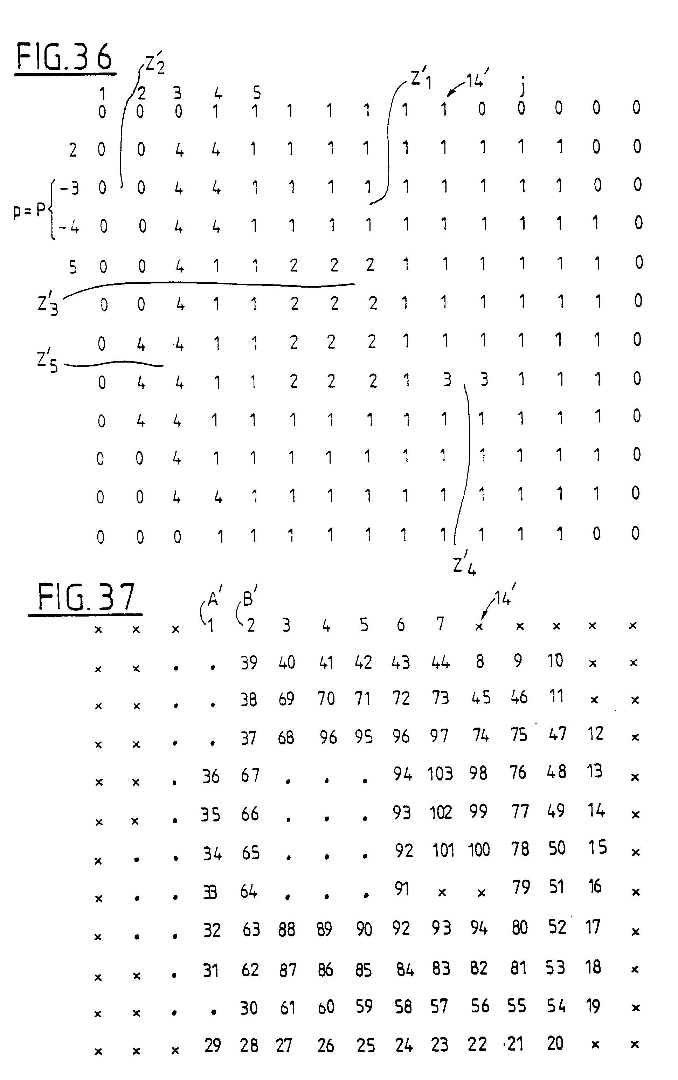

Comme on l'a vu précédemment à propos de l'exemple de la figure 5, on traite ensuite le tableau résultat 14' après déport (figure 35) en lui donnant un pas égal à la prise de passe P. Le passage du tableau résultat 14' après déport (figure 35) au tableau résultat 14' de pas P (figure 36) s'opère en ne prenant en compte qu'une ligne sur deux et une colonne sur deux, la deuxième ligne et la deuxième colonne du tableau résultat étant, de préférence dans cet exemple, soustraites en premier.

On procède ensuite au codage des points usinables 1 de la zone Z'₁ du tableau résultat 14' de la figure 36 à l'aide du même algorithme de codage que celui décrit précédemment en relation avec l'exemple de la figure 5. La figure 37 représente le tableau résultat 14' après codage des points usinables, le point de départ du codage étant le point A′ (i = 0, j = 4) codé de niveau 1 et le point suivant étant le point B′ (i = 0, j = 5) codé de niveau 2.

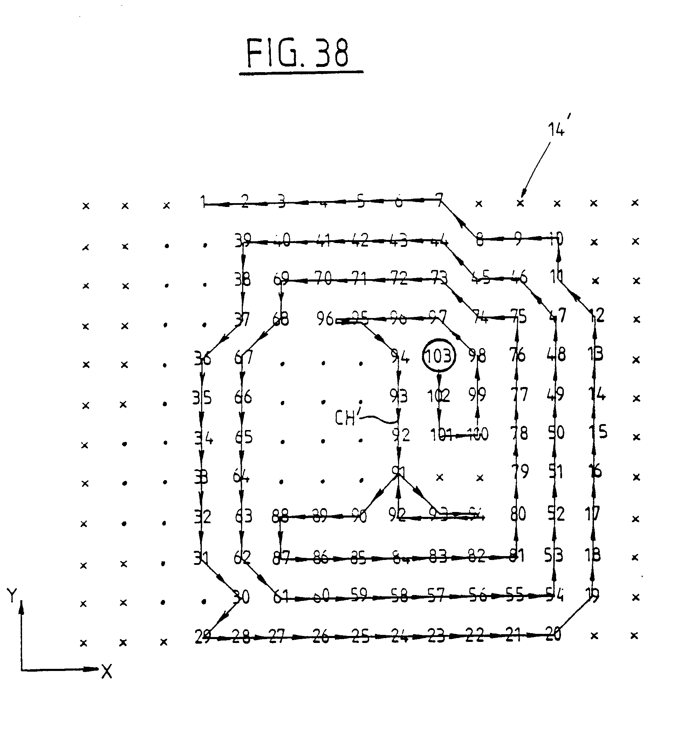

On procède ensuite à l'usinage des points codés de la figure 37 par mise en oeuvre du même algorithme d'usinage que celui décrit précédemment en relation avec l'exemple de la figure 5. La figure 38 représente le tableau résultat 14′ dans lequel est tracé le chemin CH′ de l'outil après application de l'algorithme d'usinage.

Dans cet exemple, figure 38, on notera que le point de niveau 95 est tout d'abord un point "en attente", puis devient un point "usiné" après passage par le point de niveau 96 ; de même, les points de niveaux respectifs 91 et 93 sont tout d'abord des points "en attente", puis deviennent des points "usinés" après passage, en ce qui concerne le point de niveau 93, par le point de niveau 94 et, en ce qui concerne le point 91, par le point de niveau 92, l'outil poursuivant ensuite son chemin par le point de niveau 90.

En se reportant aux figures 39 à 52, on va reprendre de nouveau le même processus décrit précédemment en relation avec l'exemple de la figure 5 (poche contenant un îlot et un évidement) , en reprenant le même exemple appliqué cette fois, en référence à la figure 39, à un surfaçage noté SU contenant l'îlot IL (de profil PI) et l'évidement EV (de profil PE).

Dans l'exemple de la figure 39, le surfaçage SU est délimité extérieurement par le contour de la pièce et présente dans le plan (X-Y) un profil extérieur noté PS formé par le bord de la pièce.

Les trois profils PS, PI et PE respectivement du surfaçage SU, de l'îlot IL et de l'évidement EV, sont chacun définis dans un même programme "PIECE" et sont chacun constitués d'une succession de segments de droite et ou d'arcs de cercle.

Selon le procédé conforme à l'invention, on commence par former le quadrillage 10, figure 39, s'étendant dans le plan (X-Y) sur tout le surfaçage SU d'une manière identique à celle décrite précédemment en relation avec l'exemple de la figure 5 (poche avec îlot et évidement).

On effectue ensuite la quantification successivement de chacun des trois profils considérés PS, PI et PE, et ce, dans n'importe quel ordre de traitement, et l'élaboration du tableau dit tableau résultat qui est l'image de la zone réelle à usiner.

A titre d'exemple, on traitera en premier lieu le profil de surfaçage PS, en second lieu le profil d'îlot PI et enfin, le profil d'évidement PE.

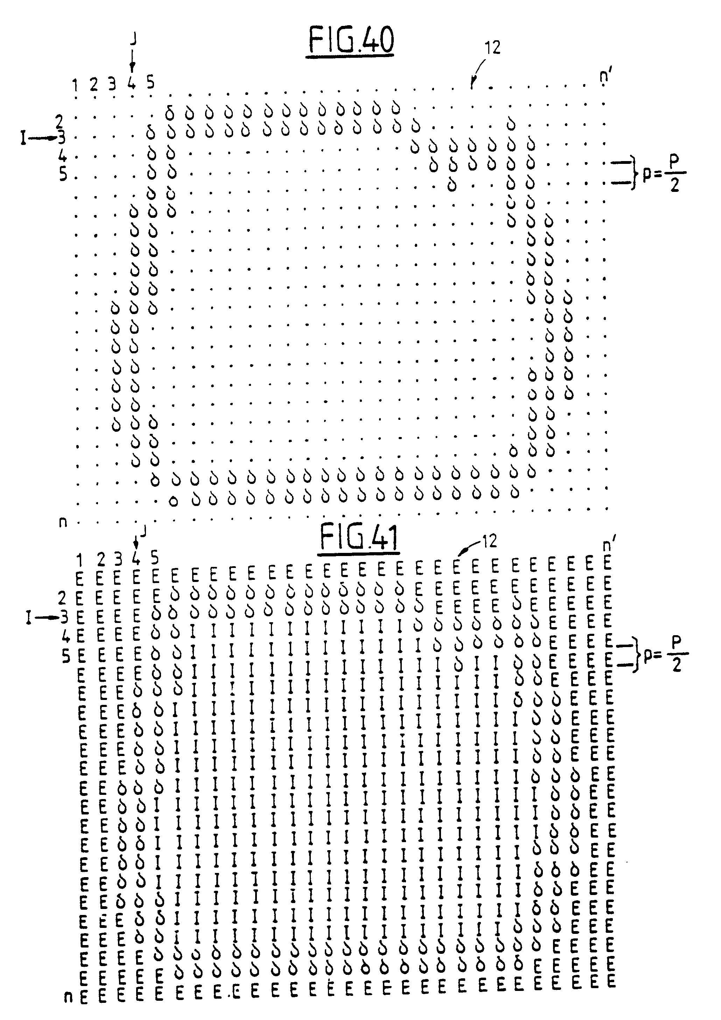

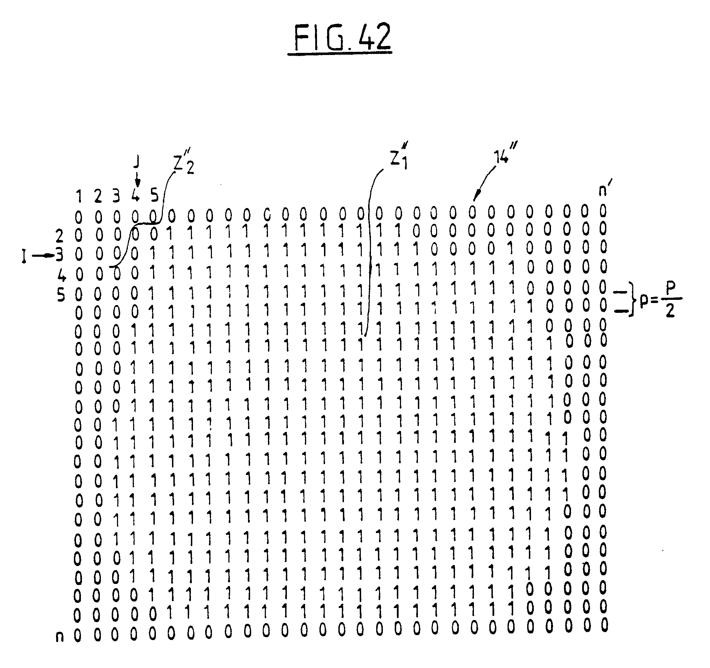

D'après l'organigramme de la figure 2, pour le premier profil considéré, ici le profil de surfaçage PS (figure 39), et en partant du quadrillage 10, on détermine d'une manière identique à celle décrite précédemment en relation avec l'exemple de la figure 5 (poche avec îlot et évidement), d'une part,

les points limites à du profil de surfaçage PS, lesquels points limites à étant ensuite reportés, comme précédemment, dans le tableau intermédiaire 12 (figure 40) préalablement initialisé à vide, d'autre part, les points intérieurs I et extérieurs E du profil de surfaçage PS en les reportant ensuite dans le tableau intermédiaire 12 propre au profil de surfaçage, comme visible à la figure 41.

Toujours d'après l'organigramme de la figure 2, on applique ensuite l'algorithme de résultat (figure 3) précédemment explicité, la nature du profil en cours de traitement dans l'exemple de la figure 39 étant un surfaçage, un îlot ou un évidement, puis on reporte chacun des états résultants dans le tableau résultat en l'occurrence sous la forme :
- d'un même premier caractère donné, par exemple la valeur 1, si l'état résultant est un état "usinable", et ce, quel que soit le profil considéré ;
- d'un même deuxième caractère donné différent du premier, par exemple la valeur 0, si l'état résultant est un état "vide" dans le cas où le profil considéré est le profil de surfaçage ;
- d'un même troisième caractère donné différent du deuxième, par exemple la valeur 2, si l'état résultant est un état "non usinable" dans le cas où le profil considéré est le profil d'îlot ;
- d'un même quatrième caractère donné différent du troisième, par exemple la valeur 3, si l'état résultant est un état "vide" dans le cas où le profil considéré est le profil d'évidement.

Dans l'exemple de la figure 39 dans lequel le profil de surfaçage PS est traité en premier, par application de l'algorithme de résultat (figure 3), et à partir d'un tableau résultat préalablement initialisé en mettant tous ses points à l'état "usinable" représenté par la valeur 1, chacun de ces points usinables 1 du tableau résultat soit reste un point usinable 1 si le point correspondant dans le tableau intermédiaire 12 (figure 41) propre au profil de surfaçage est un point limite à ou un point intérieur I, soit devient un point vide 0 si le point correspondant dans ledit tableau 12 est un point extérieur E. En fin de traitement du profil de surfaçage, comme le montre la figure 42, le tableau résultat obtenu, désigné en 14″, se compose d'une première zone Z″₁ représentative du surfaçage et formée des points usinables 1, et d'une deuxième zone Z″₂, extérieure à la première, formée des points vides 0.

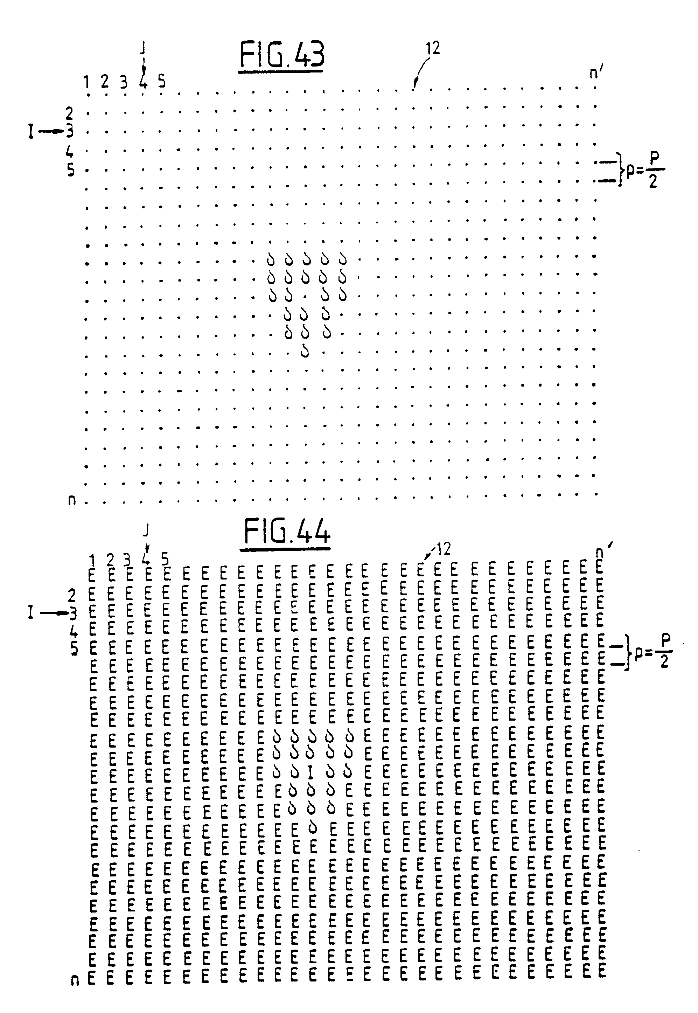

Pour le deuxième profil considéré, ici le profil d'îlot PI (figure 39), la détermination des points limites à des points intérieurs I et des points extérieurs E du profil d'îlot s'effectue à partir du quadrillage 10 d'une manière identique à celle décrite précédemment en relation avec l'exemple de la figure 5. En référence à la figure 43, on a représenté le tableau intermédiaire 12 propre au profil d'îlot PI après détermination des points limites à, et

à la figure 44, ce même tableau 12 après détermination des points intérieurs I et des points extérieurs E.

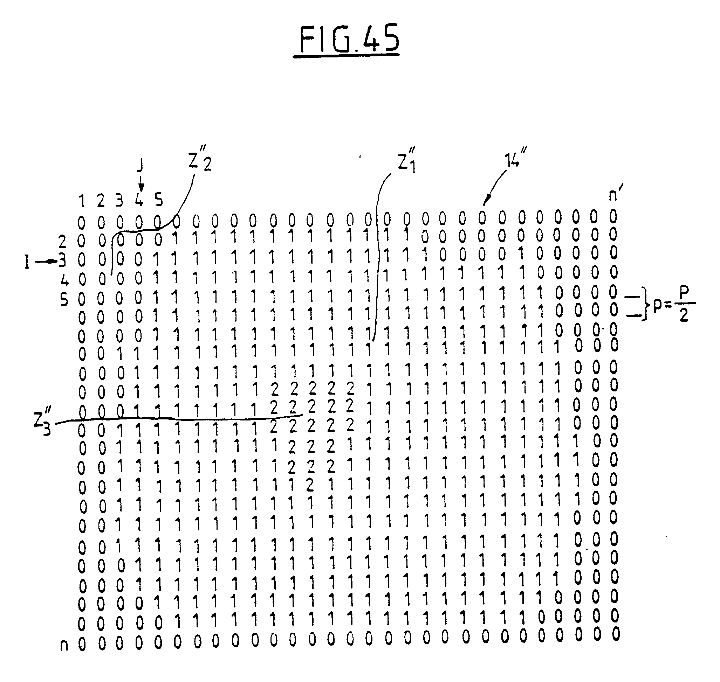

Par application de l'algorithme de résultat, figure 3, à partir du tableau résultat $14''$ précédemment obtenu (figure 42), chacun des points vides 0 de ce tableau résultat $14''$ reste un point vide 0 si le point correspondant dans le tableau intermédiaire 12 (figure 44) propre au profil d'îlot est un point extérieur E, tandis que chacun des points usinables 1 dudit tableau résultat $14''$ soit reste un point usinable 1 si le point correspondant dans le tableau intermédiaire 12 (figure 44) propre au profil d'îlot est un point extérieur E, soit devient un point non usinable 2 si le point correspondant dans ledit tableau 12 est un point limite ò ou un point intérieur I. En fin de traitement du profil d'îlot PI, comme le montre la figure 45, le tableau résultat $14''$ obtenu reproduit le tableau résultat $14''$ obtenu après traitement du profil de surfaçage PS (figure 42), mais dans lequel apparaît, dans la première zone $Z''_1$ une troisième zone $Z''_3$ représentative de l'îlot IL et formée des points non usinables 2.

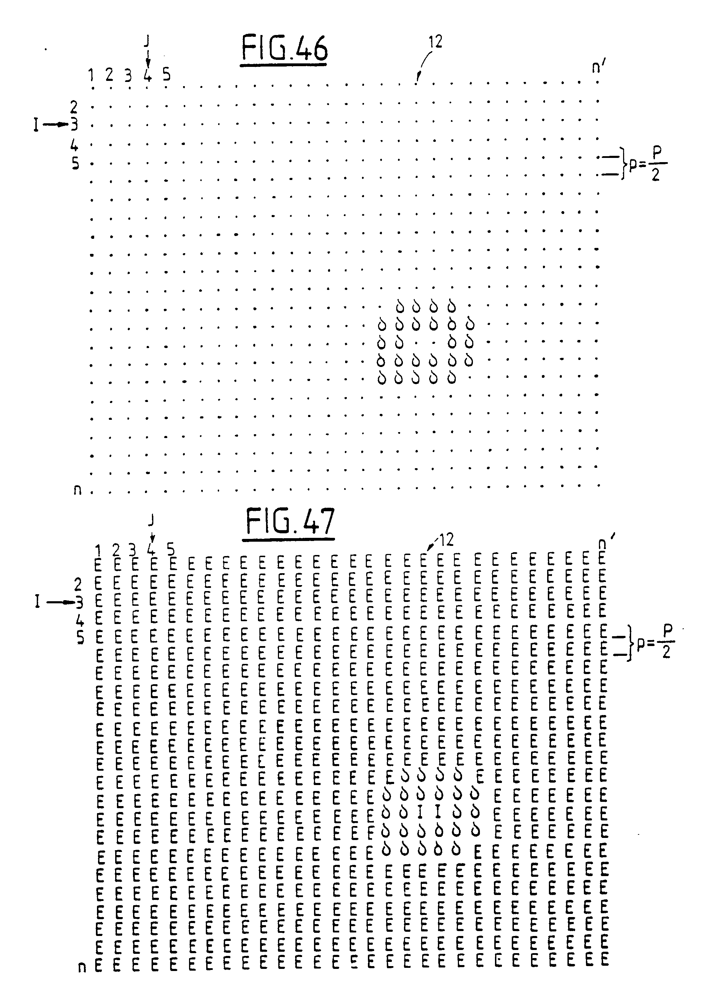

Enfin, pour le dernier profil considéré, ici le profil d'évidement PE (figure 39), la détermination des points limites ò, des points intérieurs I et des points extérieurs E du profil d'évidement PE s'effectue à partir du quadrillage 10 d'une manière identique à celle décrite en relation avec l'exemple de la figure 5. On a représenté, figure 46, le tableau intermédiaire 12 propre au profil d'évidement PE après détermination des points limites ò, et figure 47, ce même tableau 12 après détermination des points intérieurs I et des points extérieurs E.

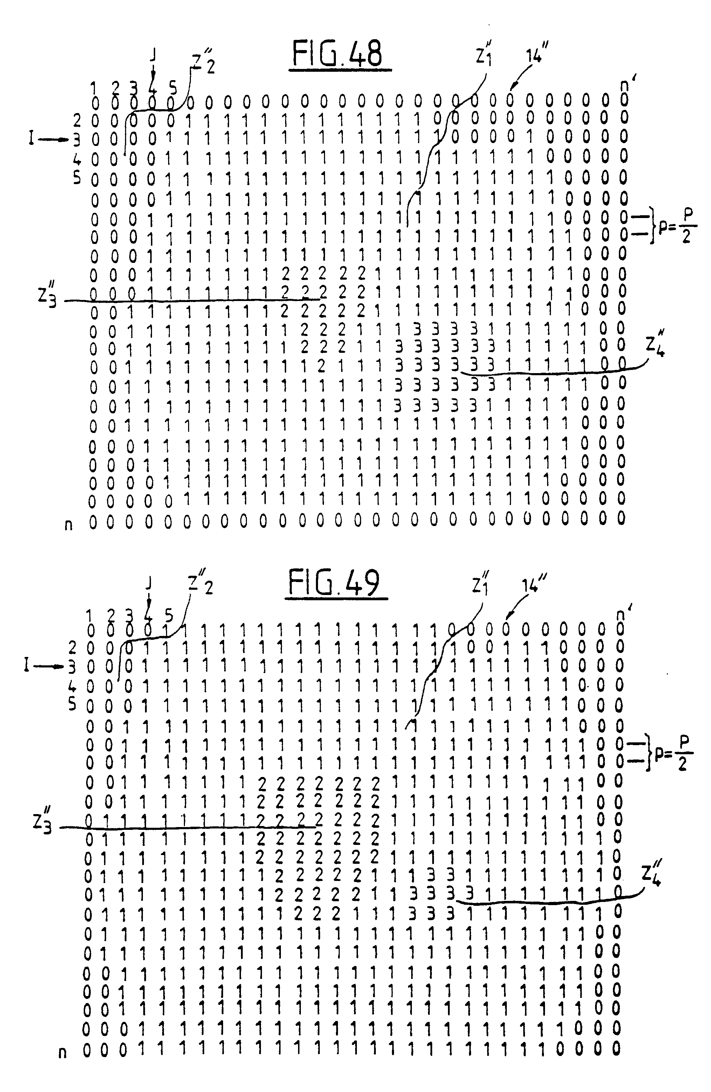

De nouveau, par application de l'algorithme de résultat (figure 3), à partir du tableau résultat $14''$ précédemment obtenu (figure 45), chacun des points non usinables 2 de ce tableau résultat $14''$ reste un point non usinable 2, chacun des points vides 0 dudit tableau résultat $14''$ reste un point vide 0 si le point correspondant dans le tableau intermédiaire 12 (figure 47) propre au profil d'évidement est un point extérieur E, tandis que chacun des points usinables 1 dudit tableau résultat $14''$ soit reste un point usinable 1 si le point correspondant dans le tableau intermédiaire 12 (figure 47) propre au profil d'évidement est un point extérieur E, soit devient un point vide 3 si le point correspondant dans ledit tableau 12 est un point limite ò ou un point intérieur I. En fin de traitement du profil d'évidement PE, comme le montre la figure 48, le tableau résultat $14''$ obtenu reproduit le tableau résultat $14''$ obtenu après traitement des profils de surfaçage PS et d'îlot PI (figure 45), mais dans lequel apparaît dans la première zone $Z''_1$ une quatrième zone $Z''_4$ représentative de l'évidement EV et formée des points vides 3.

Ainsi, après traitement des profils de surfaçage PS, d'îlot PI et d'évidement PE, le tableau résultat définitif $14''$, figure 48, se compose de quatre zones, à savoir : la zone $Z''_1$ ensemble des points usinables 1 et incluant la zone $Z''_3$ ensemble des points non usinables 2 représentatifs de l'îlot ainsi que la zone $Z''_4$ ensemble des points vides 3 représentatifs de l'évidement, et la zone $Z''_2$, extérieure à la zone $Z''_1$, ensemble des points vides 0. Ce tableau résultat $14''$ constitue donc une image de la zone réelle à usiner, en l'espèce la zone $Z''_1$.

On effectue ensuite, à partir du tableau résultat $14''$ de la figure 48, un déport des profils du type déjà décrit, consistant :

- pour la zone $Z''_3$ (points non usinables 2), à éliminer les points usinables 1 de la zone $Z''_1$ dont la distance aux points non usinables 2 est inférieure au rayon de l'outil, puis à transformer ces points usinables 1 en points non usinables 2 ;

- et ensuite, pour la zone $Z''_1$ (points usinables 1), à éliminer les points vides 0 de la zone $Z''_2$ ainsi que les points vides 3 de la zone $Z''_4$ dont la distance aux points usinables 1 est inférieure au rayon de l'outil, puis à transformer ces points vides 0 et 3 en points usinables 1.

On a représenté à la figure 49 le tableau résultat $14''$ aux quatre zones modifiées $Z''_1$, $Z''_2$, $Z''_3$ et $Z''_4$ une fois le déport effectué.

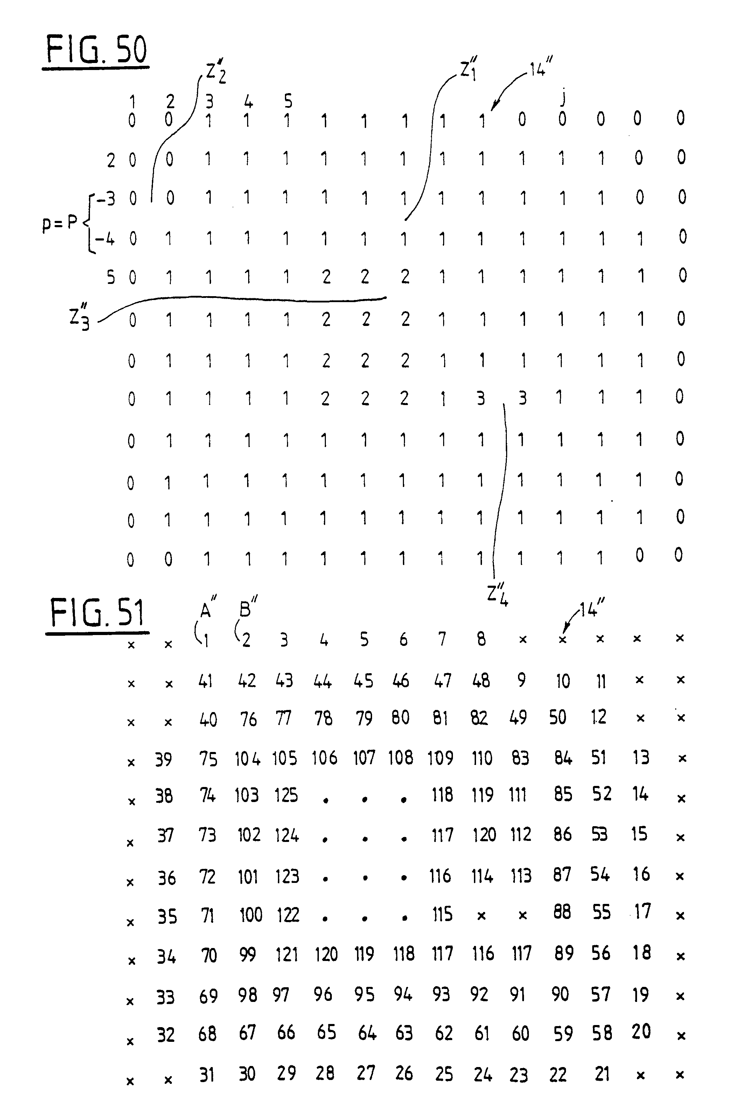

Comme on l'a vu précédemment à propos de l'exemple de la figure 5, on traite ensuite le tableau résultat $14''$ après déport (figure 49) en lui donnant un pas égal à la prise de passe P. Le passage du tableau résultat $14''$ après déport (figure 49) au tableau résultat $14''$ de pas P (figure 50) s'opère en ne prenant en compte qu'une ligne sur deux et une colonne sur deux, la deuxième ligne et la deuxième colonne du tableau résultat étant, de préférence dans cet exemple, soustraites en premier.

On procède ensuite au codage des points usinables 1 de la zone $Z''_1$ du tableau résultat $14''$ de la figure 50 à l'aide du même algorithme de codage que celui décrit plus haut en relation avec l'exemple de la figure 5. La figure 51 représente le tableau résultat $14''$ après codage des points usinables, le point de départ du codage étant le point $A''$ (i = 0, j = 3) codé de niveau 1 et le point suivant étant le point $B''$ (i = 0, j = 4) codé de niveau 2.

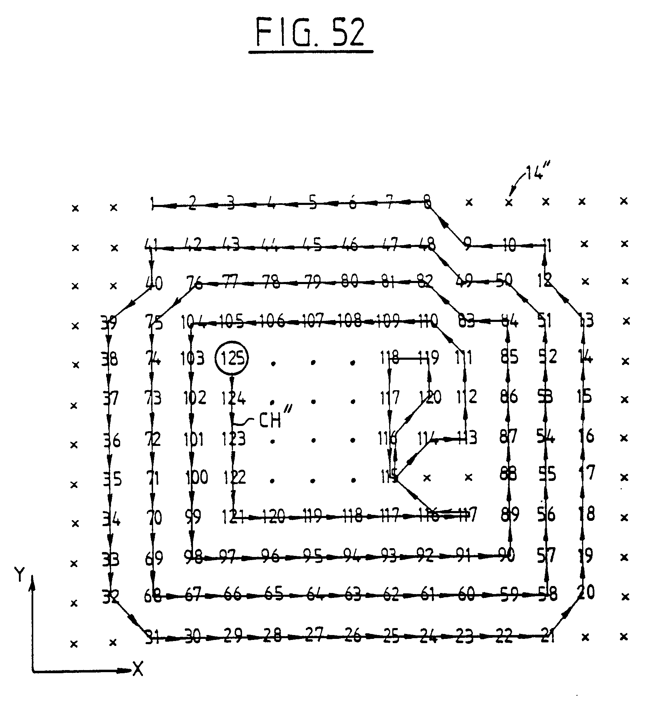

Enfin, on procède à l'usinage des points codés de la figure 51 par mise en oeuvre du même algorithme d'usinage que celui décrit précédemment en relation avec l'exemple de la figure 5. La figure 52 représente le tableau résultat $14''$ dans lequel est tracé le chemin $CH''$ de l'outil après application de l'algorithme d'usinage.

Dans cet exemple, figure 52, on notera que le point de niveau 116 est tout d'abord un point "en attente", puis devient un point usiné après passage par le point de niveau 117 ; de même, les points 115 et 116 sont tout d'abord des points "en attente", puis deviennent des points usinés après passage par les points de niveaux respectifs 120, 119, 118 et 117, l'outil poursuivant son chemin, à partir du point "usiné" de niveau 115, par le point de niveau 114.

Il convient de noter que le procédé de détermination du trajet d'outil selon l'invention est tout particulièrement intéressant dans le cas de poches, de poches ouvertes ou de surfaçages à bords droits car le trajet de l'outil est alors le même pour tous les plans de passe. Dans le cas de poches, de poches ouvertes ou de surfaçages à bords inclinés, il est par contre nécessaire de déterminer le trajet de l'outil à chaque plan de passe par mise en oeuvre du procédé.

## Revendications

1. Procédé de détermination automatique du trajet d'outil dans un usinage plan d'une poche (PO) présentant dans un plan (X-Y) un profil extérieur fermé (PP) constitué d'une succession de segments de droite et/ou d'arcs de cercle,
caractérisé en ce qu'il comprend les étapes suivantes :

i. une formation d'un quadrillage (10) s'étendant dans le plan (X-Y) sur toute la poche suivant un même pas de lignes et de colonnes qui est fonction du diamètre de l'outil, les sommets du quadrillage étant repérés par des indices ligne et colonne ;

ii. une quantification du profil de poche consistant :
- en partant du quadrillage (10), à déterminer par leurs indices respectifs de ligne et de colonne, d'une part, des points appelés points limites (ə) qui sont les sommets du quadrillage (10) les plus proches du profil de poche (PP), obtenus en recherchant pour chaque ligne et chaque colonne du quadrillage les intersections avec le profil et, d'autre part, les points situés respectivement à l'intérieur (I) et à l'extérieur (E) du profil qui sont les sommets du quadrillage laissés inoccupés par les points limites ;
- à reporter dans un tableau intermédiaire (12) propre au profil de poche et de mêmes dimensions et de même pas de lignes et de colonnes que le quadrillage (10), aux mêmes emplacements indicés de ligne et de colonne que ceux du quadrillage, les points respectivement limites (ə), intérieurs (I) et extérieurs (E) du profil en les représentant par des symboles respectifs d'identification ;

iii. une élaboration d'un tableau image de la poche, dit tableau résultat (14), de mêmes dimensions et de même pas de lignes et de colonnes que le tableau intermédiaire (12), se composant d'une première zone (Z₁) représentative de la poche et formée de points usinables qui sont affectés chacun d'un même premier caractère donné et qui correspondent aux points intérieurs du profil de poche, et d'une deuxième zone (Z₂) extérieure à la première et formée de points non usinables qui sont affectés chacun d'un même deuxième caractère donné différent du premier et qui correspondent aux points limites et extérieurs du profil de poche ;

iv. un déport du profil de poche (PP) consistant, en partant du tableau résultat (14) précédemment élaboré, à déterminer pour chaque point non usinable de la deuxième zone (Z₂) du tableau résultat les points usinables de la première zone dont la distance audit point non usinable est inférieure au rayon de l'outil, et à transformer ces points usinables en points non usinables auxquels est affecté le même deuxième caractère ;

v. un codage des points usinables de la première zone (Z₁) du tableau résultat une fois le déport réalisé, consistant :
- à prendre en compte un premier point quelconque de ladite zone (Z₁), appelé point de départ, et à lui affecter un niveau représenté par l'entier 1 ;
- à prendre en compte un deuxième point voisin du point de départ et situé sur la même ligne ou la même colonne que celui-ci, et à lui affecter un niveau représenté par l'entier 2 ;
- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier n + 1 si le point courant est affecté du niveau représenté par l'entier positif n ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi. un usinage de la première zone (Z₁) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :
- à déterminer un premier point codé, dit point de début d'usinage ;
- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

2. Procédé selon la revendication 1, caractérisé en ce que l'élaboration du tableau résultat consiste, en partant du tableau résultat (14) dont tous les points sont à l'état "usinable", à appliquer un algorithme permettant de déterminer l'état résultant - "usinable" ou "non usinable" - que prend chacun des points du tableau résultat selon que le point correspondant de même emplacement indicé dans le tableau intermédiaire (12) propre au profil de poche est un point limite (∂), intérieur (I) ou extérieur (E), et à reporter chacun des états résultants dans le tableau résultat sous la forme du même premier caractère si l'état résultant est un état "usinable" et sous la forme du même deuxième caractère si l'état résultant est un état "non usinable".

3. Procédé selon la revendication 1, caractérisé en ce que le point de départ du codage est constitué par un point usinable situé près du bord de la poche (PO) et constitue un point de fin d'usinage, tandis que le point de début d'usinage est constitué par le point codé de plus haut niveau.

4. Procédé de détermination automatique du trajet d'outil dans un usinage plan d'une poche (PO) contenant au moins un îlot (IL) et/ou au moins un évidement (EV), la poche ainsi que l'îlot et/ou l'évidement présentant chacun dans un plan (X-Y) un profil extérieur fermé (PP ; PI ; PE) constitué d'une succession de segments de droite et/ou d'arcs de cercle, caractérisé en ce qu'il comprend les étapes suivantes :

i/ une formation d'un quadrillage (10) s'étendant dans le plan (X-Y) sur toute la poche suivant un même pas de lignes et de colonnes qui est fonction du diamètre de l'outil, les sommets du quadrillage étant repérés par des indices ligne et colonne ;

ii/ une quantification des profils considérés - poche, îlot et/ou évidement - consistant :
- pour chacun des profils considérés (PP ; PI ; PE) et en partant du même quadrillage (10), à déterminer par leurs indices respectifs de ligne et de colonne, d'une part, des points appelés points limites (∂) qui sont les sommets du quadrillage (10) les plus proches du profil considéré, obtenus en recherchant pour chaque ligne et chaque colonne du quadrillage les intersections avec le profil et, d'autre part, les points situés respectivement à l'intérieur (I) et à l'extérieur (E) du profil qui sont les sommets du quadrillage laissés inoccupés par les points limites ;
- à reporter dans un tableau intermédiaire (12) propre à chacun des profils considérés et de mêmes dimensions et de même pas de lignes et de colonnes que le quadrillage (10), aux mêmes emplacements indicés de ligne et de colonne que ceux du quadrillage, les points respectivement limites (∂), intérieurs (I) et extérieurs (E) du profil considéré en les représentant par des symboles respectifs d'identification ;

iii/ une élaboration d'un tableau image de l'ensemble poche - îlot et/ou évidement, dit tableau résultat (14), de mêmes dimensions et de même pas de lignes et de colonnes que le tableau intermédiaire (12), se composant d'une première zone $(Z_1)$ représentative de la poche et formée de points usinables qui sont affectés chacun d'un même premier caractère donné et qui correspondent aux points intérieurs du profil de poche, d'une deuxième zone $(Z_2)$ extérieure à la première et formée de points non usinables qui sont affectés chacun d'un même deuxième caractère donné différent du premier et qui correspondent aux points limites et extérieurs du profil de poche, et à l'intérieur de la première zone $(Z_1)$, d'une troisième zone $(Z_3)$ représentative de l'îlot et formée de points non usinables qui sont affectés chacun d'un même troisième caractère donné différent du deuxième et qui correspondent aux points limites et intérieurs du profil d'îlot, et/ou d'une quatrième zone $(Z_4)$ représentative de l'évidement et formée de points vides qui sont affectés chacun d'un même quatrième caractère donné différent du troisième et qui correspondent aux points limites et intérieurs du profil d'évidement ; iv/ un déport de chacun des profils (PP ; PI ; PE) consistant, en partant du tableau résultat (14) précédemment élaboré :
- en ce qui concerne le profil de poche (PP), à déterminer, pour chaque point non usinable de la deuxième zone $(Z_2)$ du tableau résultat, les points usinables de la première zone dont la distance audit point non usinable est inférieure au rayon de l'outil, et à transformer ces points usinables en points non usinables auxquels est affecté le même deuxième caractère ;
- en ce qui concerne le profil d'îlot (PI), à déterminer, pour chaque point non usinable de la troisième zone $(Z_3)$ du tableau résultat, les points usinables de la première zone dont la distance audit point non usinable est inférieure au rayon de l'outil, et à transformer ces points usinables en points non usinables auxquels est affecté le même troisième caractère ;
- en ce qui concerne le profil d'évidement (PE), à déterminer, pour chaque point usinable de la première zone $(Z_1)$ du tableau résultat, les points vides de la quatrième zone dont la distance audit point usinable est inférieure au rayon de l'outil, et à transformer ces points vides en points usinables auxquels est affecté le même premier caractère ;

v/ un codage des points usinables de la première zone ($Z_1$) du tableau résultat une fois le déport réalisé, consistant :

- à prendre en compte un premier point quelconque de ladite zone ($Z_1$), appelé point de départ, et à lui affecter un niveau représenté par l'entier 1 ;
- à prendre en compte un deuxième point voisin du point de départ et situé sur la même ligne ou la même colonne que celui-ci, et à lui affecter un niveau représenté par l'entier 2 ;
- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier $n+1$ si le point courant est affecté du niveau représenté par l'entier positif $n$ ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi/ un usinage de la première zone ($Z_1$) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à $45°$ par rapport à ces axes, consistant en spécifiant au départ que tous les points codés sont des points "non usinés" :

- à déterminer un premier point codé, dit point de début d'usinage ;
- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

5. Procédé selon la revendication 4, caractérisé en ce que l'élaboration du tableau résultat consiste, en utilisant un algorithme qui permet, connaissant l'état précédent - "usinable", "non usinable" ou "vide" -pris par chacun des points du tableau résultat (14), de déterminer l'état résultant - "usinable", "non usinable" ou "vide" - que prend chacun de ces points du tableau résultat en fonction de la nature du profil considéré - poche, îlot ou évidement - et du type - limite, intérieur ou extérieur -du point correspondant de même emplacement indicé dans le tableau intermédiaire (12) propre au profil considéré, à appliquer cet algorithme successivement pour chacun des profils considérés (PP ; PI ; PE) en partant pour le premier profil considéré du tableau résultat dont tous les points sont à l'état "usinable", et à reporter chacun des états résultants dans le tableau résultat sous la forme du même premier caractère si l'état résultant est un état "usinable" quel que soit le profil considéré, sous la forme du même deuxième caractère si l'état résultant est un état "non usinable" dans le cas où le profil considéré est le profil de poche (PP), sous la forme du même troisième caractère si l'état résultant est un état "non usinable" dans le cas où le profil considéré est le profil d'îlot (PI) et sous la forme du même quatrième caractère si l'état résultant est un état "vide" dans le cas où le profil considéré est le profil d'évidement (PE).

6. Procédé selon la revendication 4, caractérisé en ce que le point de départ du codage est constitué par un point usinable situé près du bord de la poche (PO) ou, éventuellement, de l'îlot (IL) et constitue un point de fin d'usinage, tandis que le point de début d'usinage est constitué par le point codé de plus haut niveau.

7. Procédé de détermination automatique du trajet d'outil dans un usinage plan d'une poche dite ouverte (POO) à usiner dans une pièce, ladite poche ouverte étant délimitée extérieurement par au moins une paroi délimitant une région à ne pas usiner et par au moins un bord de contour extérieur de la pièce, et présentant dans un plan (X-Y) un profil extérieur global (PPO) comprenant celui de la paroi (PPA) et celui du bord de la pièce et étant constitué d'une succession de segments de droite et/ou d'arcs de cercle, caractérisé en ce qu'il comprend les étapes suivantes :

i/ une formation d'un quadrillage (10) s'étendant dans le plan (X-Y) sur toute la poche ouverte suivant un même pas de lignes et de colonnes qui est fonction du diamètre de l'outil, les sommets du quadrillage étant repérés par des indices ligne et colonne ;

ii/ a) une quantification du profil extérieur global (PPO) de la poche ouverte en considérant celui-ci comme un profil de surfaçage, consistant :
- en partant du quadrillage (10), à déterminer par leurs indices respectifs de ligne et de colonne, d'une part, des points appelés points limites (ò) qui sont les sommets du quadrillage les plus proches du profil extérieur global (PPO) de la poche ouverte, obtenus en recherchant pour chaque ligne et chaque colonne du quadrillage les intersections avec le profil et, d'autre part, les points situés respectivement à l'intérieur (I) et à l'extérieur (E) du profil qui sont les sommets du quadrillage laissés inoccupés par les points limites ;

- à reporter dans un tableau intermédiaire (12) propre au profil extérieur global (PPO) de la poche ouverte et de mêmes dimensions et de même pas de lignes et de colonnes que le quadrillage (10), aux mêmes emplacements indicés de ligne et de colonne que ceux du quadrillage, les points respectivement limites (∂), intérieurs (I) et extérieurs (E) du profil en les représentant par des symboles respectifs d'identification ;

b) une quantification du profil de paroi (PPA) de la poche ouverte en considérant celui-ci comme un profil d'îlot d'épaisseur nulle, consistant :

- en partant du quadrillage (10), à déterminer par leurs indices respectifs de ligne et de colonne, d'une part, des points appelés points limites (∂) qui sont les sommets du quadrillage les plus proches du profil de paroi de la poche ouverte, obtenus en recherchant pour chaque ligne et chaque colonne du quadrillage les intersections avec le profil et, d'autre part, les points situés de part et d'autre du profil qui sont des points extérieurs (E) formés par les sommets du quadrillage laissés inoccupés par les points limites ;

- à reporter dans un tableau intermédiaire (12) propre au profil de paroi (PPA) de la poche ouverte et de mêmes dimensions et de même pas de lignes et de colonnes que le quadrillage (10), aux mêmes emplacements indicés de ligne et de colonne que ceux du quadrillage, les points respectivement limites (∂) et extérieurs (E) du profil en les représentant par des symboles respectifs d'identification ;

iii/ une élaboration d'un tableau image de la poche ouverte, dit tableau résultat (14') de mêmes dimensions et de même pas de lignes et de colonnes que le tableau intermédiaire (12), se composant d'une première zone ($Z'_1$) représentative de la poche à l'exception de sa paroi et formée de points usinables qui sont affectés chacun d'un même premier caractère donné et qui correspondent aux points limites et intérieurs du profil extérieur global de la poche, d'une deuxième zone ($Z'_5$) représentative de la paroi de la poche, bordant la première zone et formée de points non usinables qui sont affectés chacun d'un même deuxième caractère donné différent du premier et qui correspondent aux points limites du profil de paroi de la poche, et d'une troisième zone ($Z'_2$) extérieure aux deux autres et formée de points vides qui sont affectés chacun d'un même troisième caractère donné différent du deuxième et qui correspondent aux points extérieurs du profil extérieur global de la poche ;

iv/ un déport du profil de poche (PPO, PPA) consistant, en partant du tableau résultat (14') précédemment élaboré, à déterminer, d'une part, pour chaque point non usinable de la deuxième zone ($Z'_5$) du tableau résultat les points usinables de la première zone dont la distance audit point non usinable est inférieure au rayon de l'outil, et à transformer ces points usinables en points non usinables auxquels est affecté le même deuxième caractère, d'autre part, pour chaque point usinable de la première zone ($Z'_1$) du tableau résultat les points vides de la troisième zone dont la distance audit point usinable est inférieure au rayon de l'outil, et à transformer ces points vides en points usinables auxquels est affecté le même premier caractère ;

v/ un codage des points usinables de la première zone ($Z'_1$) du tableau résultat une fois le déport réalisé, consistant :

- à prendre en compte un premier point quelconque de ladite zone ($Z'_1$), appelé point de départ, et à lui affecter un niveau représenté par l'entier 1 ;

- à prendre en compte un deuxième point voisin du point de départ et situé sur la même ligne ou la même colonne que celui-ci, et à lui affecter un niveau représenté par l'entier 2 ;

- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier n + 1 si le point courant est affecté du niveau représenté par l'entier positif n ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi/ un usinage de la première zone ($Z'_1$) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :

- à déterminer un premier point codé, dit point de début d'usinage ;

- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

8. Procédé selon la revendication 7, caractérisé en ce que l'élaboration du tableau résultat consiste, en utilisant un algorithme qui permet, connaissant l'état précédent - "usinable", "non usinable" ou "vide" -pris par chacun des points du tableau résultat (14'), de déterminer l'état résultant - "usinable", "non usinable" ou "vide" - que prend chacun de ces points du tableau résultat en fonction de chacun des deux profils considérés pour la poche ouverte - surfaçage pour son profil extérieur global, et paroi - et du type - limite, intérieur ou extérieur - du point correspondant de même emplacement indicé dans le tableau intermédiaire (12) propre à chacun des deux profils considérés pour la poche, à appliquer cet algorithme successivement pour chacun des deux profils considérés (PPO, PPA) pour la poche en partant pour le premier profil considéré du tableau résultat dont tous les points sont à l'état "usinable", et à reporter chacun des états résultants dans le tableau résultat sous la forme du même premier caractère si l'état résultant est un état "usinable" dans le cas où le profil considéré pour la poche est son profil extérieur global (PPO) - surfaçage - ou sa paroi (PPA), sous la forme du même deuxième caractère si l'état résultant est un état "non usinable" dans le cas où le profil considéré pour la poche est sa paroi (PPA) et sous la forme du même troisième caractère si l'état résultant est un état "vide" dans le cas où le profil considéré pour la poche est son profil extérieur global (PPO) - surfaçage -.

9. Procédé de détermination automatique du trajet d'outil dans un usinage plan d'une poche dite ouverte (POO) à usiner dans une pièce et contenant au moins un îlot (IL) et/ou au moins un évidement (EV), ladite poche ouverte étant délimitée extérieurement par au moins une paroi délimitant une région à ne pas usiner et par au moins un bord de contour extérieur de la pièce, et présentant dans un plan (X-Y) un profil extérieur global (PPO) formé par celui de la paroi (PPA) et par celui du bord de la pièce et constitué d'une succession de segments de droite et/ou d'arcs de cercle, l'îlot et/ou l'évidement présentant chacun dans le plan (X-Y) un profil extérieur fermé (PI ; PE) constitué également d'une succession de segments de droite et/ou d'arcs de cercle, caractérisé en ce qu'il comprend les étapes suivantes :

i/ une formation d'un quadrillage (10) s'étendant dans le plan (X-Y) sur toute la poche ouverte suivant un même pas de lignes et de colonnes qui est fonction du diamètre de l'outil, les sommets du quadrillage étant repérés par des indices ligne et colonne ;

ii/ a) une quantification des profils considérés, à savoir : le profil extérieur global (PPO) de la poche ouverte en considérant celui-ci comme un profil de surfaçage, le profil d'îlot (PI) et/ou le profil d'évidement (PE), consistant :

- pour chacun de ces profils considérés et en partant du même quadrillage (10), à déterminer par leurs indices respectifs de ligne et de colonne, d'une part, des points appelés points limites (ò) qui sont les sommets du quadrillage (10) les plus proches du profil considéré, obtenus en recherchant pour chaque ligne et chaque colonne de quadrillage les intersections avec le profil et, d'autre part, les points situés respectivement à l'intérieur (I) et à l'extérieur (E) du profil qui sont les sommets du quadrillage laissés inoccupés par les points limites ;

- à reporter dans un tableau intermédiaire (12) propre à chacun des profils considérés (PPO ; PI ; PE) et de mêmes dimensions et de même pas de lignes et de colonnes que le quadrillage (10), aux mêmes emplacements indicés de ligne et de colonne que ceux du quadrillage, les points respectivement limites (ò), intérieurs (I) et extérieurs (E) du profil considéré en les représentant par des symboles respectifs d'identification ;

b) une quantification du profil de paroi (PPA) de la poche ouverte en considérant celui-ci comme un profil d'îlot d'épaisseur nulle, consistant :

- en partant du quadrillage (10), à déterminer par leurs indices respectifs de ligne et de colonne, d'une part, des points appelés points limites (ò) qui sont les sommets du quadrillage les plus proches du profil de paroi de la poche ouverte, obtenus en recherchant pour chaque ligne et chaque colonne du quadrillage les intersections avec le profil et, d'autre part, les points situés de part et d'autre du profil qui sont des points extérieurs (E) formés par les sommets du quadrillage laissés inoccupés par les points limites ;

- à reporter dans un tableau intermédiaire (12) propre au profil de paroi (PPA) de la poche ouverte et de mêmes dimensions et de même pas de lignes et de colonnes que le quadrillage (10), aux mêmes emplacements indicés de ligne et de colonne que ceux du quadrillage, les points respectivement limites (ò) et extérieurs (E) du profil en les représentant par des symboles respectifs d'identification ;

iii/ une élaboration d'un tableau image de l'ensemble poche ouverte - îlot et/ou évidement, dit tableau résultat (14'), de mêmes dimensions et de même pas de lignes et de colonnes que le tableau intermédiaire (12), se composant d'une première zone (Z'₁) représentative de la poche à l'exception de sa paroi et formée de points usinables qui sont affectés chacun d'un même premier caractère donné et qui correspondent aux points limites et intérieurs du profil extérieur global de la poche, d'une deuxième zone (Z'₅) représentative de la paroi de la poche, bordant la première zone et formée de points non usinables qui sont affectés chacun d'un même deuxième caractère donné différent du premier et qui correspondent aux points limites du profil de paroi de la poche, d'une troisième zone ($Z'_2$) extérieure aux deux précédentes et formée de points vides qui sont affectés chacun d'un même troisième caractère donné différent du deuxième et qui correspondent aux points extérieurs du profil extérieur global de la poche, et à l'intérieur de la première zone ($Z'_1$), d'une quatrième zone ($Z'_3$) représentative de l'îlot et formée de points non usinables qui sont affectés chacun d'un même quatrième caractère donné différent du troisième et qui correspondent aux points limites et intérieurs du profil d'îlot, et/ou d'une cinquième zone ($Z'_4$) représentative de l'évidement et formée de points vides qui sont affectés chacun d'un même cinquième caractère donné différent du quatrième et qui correspondent aux points limites et intérieurs du profil d'évidement ;

iv/ un déport des profils respectivement de poche ouverte, d'îlot et/ou d'évidement, consistant, en partant du tableau résultat ($14'$) précédemment élaboré :

- en ce qui concerne le profil de poche ouverte (PPO, PPA), à déterminer, d'une part, pour chaque point non usinable de la deuxième zone ($Z'_5$) du tableau résultat les points usinables de la première zone dont la distance audit point non usinable est inférieure au rayon de l'outil, et à transformer ces points usinables en points non usinables auxquels est affecté le même deuxième caractère, d'autre part, pour chaque point usinable de la première zone ($Z'_1$) du tableau résultat les points vides de la troisième zone dont la distance audit point usinable est inférieure au rayon de l'outil, et à transformer ces points vides en points usinables auxquels est affecté le même premier caractère ;

- en ce qui concerne le profil d'îlot (PI), à déterminer, pour chaque point non usinable de la quatrième zone ($Z'_3$) du tableau résultat, les points usinables de la première zone dont la distance audit point non usinable est inférieure au rayon de l'outil, et à transformer ces points usinables en points non usinables auxquels est affecté le même quatrième caractère ;

- en ce qui concerne le profil d'évidement (PE), à déterminer, pour chaque point usinable de la première zone ($Z'_1$) du tableau résultat, les points vides de la cinquième zone dont la distance audit point usinable est inférieure au rayon de l'outil, et à transformer ces points vides en points usinables auxquels est affecté le même premier caractère ;

v/ un codage des points usinables de la première zone ($Z'_1$) du tableau résultat une fois le déport réalisé, consistant :

- à prendre en compte un premier point quelconque de ladite zone ($Z'_1$), appelé point de départ, et à lui affecter un niveau représenté par l'entier 1 ;

- à prendre en compte un deuxième point voisin du point de départ et situé sur la même ligne ou la même colonne que celui-ci, et à lui affecter un niveau représenté par l'entier 2 ;

- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier $n + 1$ si le point courant est affecté du niveau représenté par l'entier positif $n$ ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi/ un usinage de la première zone ($Z'_1$) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :

- à déterminer un premier point codé, dit point de début d'usinage ;

- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

10. Procédé selon la revendication 9, caractérisé en ce que l'élaboration du tableau résultat consiste, en utilisant un algorithme aui permet, connaissant l'état précédent - "usinable", "non usinable" ou "vide" -pris par chacun des points du tableau résultat ($14'$), de déterminer l'état résultant - "usinable", "non usinable" ou "vide" - que prend chacun de ces points du tableau résultat en fonction de la nature du profil considéré - surfaçage pour le profil extérieur global de la poche ouverte, paroi de la poche ouverte, îlot ou évidement - et du type - limite, intérieur ou extérieur - du point correspondant de même emplacement indicé dans le tableau intermédiaire (12) propre au profil considéré, à appliquer cet algorithme successivement pour chacun des profils considérés (PPO

; PPA ; PI ; PE) en partant par le premier profil considéré du tableau résultat dont tous les points sont à l'état "usinable", et à reporter chacun des états résultants dans le tableau résultat sous la forme du même premier caractère si l'état résultant est un état "usinable" quel que soit le profil considéré, sous la forme du même deuxième caractère si l'état résultant est un état "non usinable" dans le cas où le profil considéré est le profil de paroi (PPA) de la poche, sous la forme du même troisième caractère si l'état résultant est un état "vide" dans le cas où le profil considéré est le profil extérieur global (PPO) - surfaçage - de la poche, sous la forme du même quatrième caractère si l'état résultant est un état "non usinable" dans le cas où le profil considéré est le profil d'îlot (PI) et sous la forme du même cinquième caractère si l'état résultant est un état "vide" dans le cas où le profil considéré est le profil d'évidement (PE).

11. Procédé de détermination automatique du trajet d'outil dans un usinage plan d'un surfaçage (SU) d'une pièce, ledit surfaçage étant délimité extérieurement par le contour de la pièce et présentant dans un plan (X-Y) un profil extérieur (PS) formé par le bord de la pièce et constitué d'une succession de segments de droite et/ou d'arcs de cercle,
caractérisé en ce qu'il comprend les étapes suivantes :

i/ une formation d'un quadrillage (10) s'étendant dans le plan (X-Y) sur tout le surfaçage suivant un même pas de lignes et de colonnes qui est fonction du diamètre de l'outil, les sommets du quadrillage étant repérés par des indices ligne et colonne ;

ii/ une quantification du profil de surfaçage consistant :

- en partant du quadrillage (10), à déterminer par leurs indices respectifs de ligne et de colonne, d'une part, des points appelés points limites (∂) qui sont les sommets du quadrillage (10) les plus proches du profil de surfaçage (PS), obtenus en recherchant pour chaque ligne et chaque colonne du quadrillage les intersections avec le profil et, d'autre part, les points situés respectivement à l'intérieur (I) et à l'extérieur (E) du profil qui sont les sommets du quadrillage laissés inoccupés par les points limites ;

- à reporter dans un tableau intermédiaire (12) propre au profil de surfaçage et de mêmes dimensions et de même pas de lignes et de colonnes que le quadrillage (10), aux mêmes emplacements indicés de ligne et de colonne que ceux du quadrillage, les points respectivement limites (∂), intérieurs (I) et extérieurs (E) du profil en les représentant par des symboles respectifs d'identification ;

iii/ une élaboration d'un tableau image de surfaçage, dit tableau résultat (14$''$), de mêmes dimensions et de même pas de lignes et de colonnes que le tableau intermédiaire (12), se composant d'une première zone (Z$''_1$) représentative du surfaçage et formée de points usinables qui sont affectés chacun d'un même premier caractère donné et qui correspondent aux points limites et intérieurs du profil de surfaçage, et d'une deuxième zone (Z$''_2$) extérieure à la première et formée de points vides qui sont affectés chacun d'un même deuxième caractère donné différent du premier et qui correspondent aux points extérieurs du profil de surfaçage ;

iv/ un déport du profil de surfaçage (PS) consistant, en partant du tableau résultat (14$''$) précédemment élaboré, à déterminer pour chaque point usinable de la première zone (Z$''_1$) du tableau résultat les points vides de la deuxième zone dont la distance audit point usinable est inférieure au rayon de l'outil, et à transformer ces points vides en points usinables auxquels est affecté le même premier caractère ;

v/ un codage des points usinables de la première zone (Z$''_1$) du tableau résultat une fois le déport réalisé, consistant :

- à prendre en compte un premier point quelconque de ladite zone (Z$''_1$), appelé point de départ, et à lui affecter un niveau représenté par l'entier 1 ;

- à prendre en compte un deuxième point voisin du point de départ et situé sur la même ligne ou la même colonne que celui-ci, et à lui affecter un niveau représenté par l'entier 2 ;

- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier $n+1$ si le point courant est affecté du niveau représenté par l'entier positif $n$ ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi/ un usinage de la première zone (Z$''_1$) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :

- à déterminer un premier point codé, dit point de début d'usinage ;

- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

12. Procédé selon la revendication 11, caractérisé en ce que l'élaboration du tableau résultat consiste, en partant du tableau résultat ($14''$) dont tous les points sont à l'état "usinable", à appliquer un algorithme permettant de déterminer l'état résultant - "usinable" ou "vide" - que prend chacun des points du tableau résultat selon que le point correspondant de même emplacement indicé dans le tableau intermédiaire (12) propre au profil de surfaçage est un point limite ($\partial$), intérieur (I) ou extérieur (E), et à reporter chacun des états résultants dans le tableau résultat sous la forme du même premier caractère si l'état résultant est un état "usinable" et sous la forme du même deuxième caractère si l'état résultant est un état "vide".

13. Procédé de détermination automatique du trajet d'outil dans un usinage plan d'un surfaçage (SU) d'une pièce et contenant au moins un îlot (IL) et/ou au moins un évidement (EV), ledit surfaçage étant délimité extérieurement par le contour de la pièce et présentant dans un plan (X-Y) un profil extérieur (PS) formé par le bord de la pièce et constitué d'une succession de segments de droite et/ou d'arcs de cercle, l'îlot et/ou l'évidement présentant chacun dans le plan (X-Y) un profil extérieur fermé (PI ; PE) constitué également d'une succession de segments de droite et/ou d'arcs de cercle, caractérisé en ce qu'il comprend les étapes suivantes :

i/ une formation d'un quadrillage (10) s'étendant dans le plan (X-Y) sur tout le surfaçage suivant un même pas de lignes et de colonnes qui est fonction du diamètre de l'outil, les sommets du quadrillage étant repérés par des indices ligne et colonne ;

ii/ une quantification des profils considérés - surfaçage, îlot et/ou évidement - consistant :
- pour chacun des profils considérés (PS ; PI ; PE) et en partant du même quadrillage (10), à déterminer par leurs indices respectifs de ligne et de colonne, d'une part, des points appelés points limites ($\partial$) qui sont les sommets du quadrillage (10) les plus proches du profil considéré, obtenus en recherchant pour chaque ligne et chaque colonne du quadrillage les intersections avec le profil et, d'autre part, les points situés respectivement à l'intérieur (I) et à l'extérieur (E) du profil qui sont les sommets du quadrillage laissés inoccupés par les points limites ;
- à reporter dans un tableau intermédiaire (12) propre à chacun des profils considérés et de mêmes dimensions et de même pas de lignes et de colonnes que le quadrillage (10), aux mêmes emplacements indicés de ligne et de colonne que oeux du quadrillage, les points respectivement limites ($\partial$), intérieurs (I) et extérieurs (E) du profil considéré en les représentant par des symboles respectifs d'identification ;

iii/ une élaboration d'un tableau image de l'ensemble surfaçage - îlot et/ou évidement, dit tableau résultat ($14''$), de mêmes dimensions et de même pas de lignes et de colonnes que le tableau intermédiaire (12), se composant d'une première zone ($Z''_1$) représentative du surfaçage et formée de points usinables qui sont affectés chacun d'un même premier caractère donné et qui correspondent aux points limites et intérieurs du profil de surfaçage, d'une deuxième zone ($Z''_2$) extérieure à la première et formée de points vides qui sont affectés chacun d'un même deuxième caractère donné différent du premier et qui correspondent aux points extérieurs du profil de surfaçage, et à l'intérieur de la première zone ($Z''_1$), d'une troisième zone ($Z''_3$) représentative de l'îlot et formée de points non usinables qui sont affectés chacun d'un même troisième caractère donné différent du deuxième et qui correspondent aux points limites et intérieurs du profil d'îlot, et/ou d'une quatrième zone ($Z''_4$) représentative de l'évidement et formée de points vides qui sont affectés chacun d'un même quatrième caractère donné différent du troisième et qui correspondent aux points limites et intérieurs du profil d'évidement ;

iv/ un déport de chacun des profils (PS ; PI ; PE) consistant, en partant du tableau résultat ($14''$) précédemment élaboré ;
- en ce qui concerne le profil de surfaçage (PS), à déterminer, pour chaque point usinable de la première zone ($Z''_1$) du tableau résultat, les points vides de la deuxième zone dont la distance audit point usinable est inférieure au rayon de l'outil, et à transformer ces points vides en points usinables auxquels est affecté le même premier caractère ;
- en ce qui concerne le profil d'îlot (PI), à déterminer, pour chaque point non usinable de la troisème zone ($Z''_3$) du tableau résultat, les points usinables de la première zone dont la distance audit point non usinable est inférieure au rayon de l'outil, et à transformer ces points usinables en points non usinables auxquels est affecté le même troisième caractère ;
- en ce qui concerne le profil d'évidement (PE), à déterminer, pour chaque point usinable de la première zone ($Z''_1$) du tableau résultat, les points vides de la quatrième zone dont la distance audit point usinable est inférieure au rayon de l'outil, et à transformer ces points vides en points usinables auxquels est affecté le même premier caractère ;

v/ un codage des points usinables de la première zone ($Z''_1$) du tableau résultat une fois le déport réalisé, consistant ;

- à prendre en compte un premier point quelconque de ladite zone ($Z''_1$), appelé point de départ, et à lui affecter un niveau représenté par l'entier 1 ;

- à prendre en compte un deuxième point voisin du point de départ et situé sur la même ligne ou la même colonne que celui-ci, et à lui affecter un niveau représenté par l'entier 2 ;

- à passer ensuite d'un point courant codé au point suivant en recherchant s'il existe parmi ses voisins un point non codé, cette recherche se faisant en partant du point qui a été codé précédemment au point courant et en tournant autour du point courant dans un même sens de recherche prédéterminé ; si le point non codé existe, à lui affecter un niveau représenté par l'entier $n+1$ si le point courant est affecté du niveau représenté par l'entier positif $n$ ; si le point non codé n'existe pas, à faire "marche arrière" jusqu'à trouver un point codé qui ait au moins un voisin non codé, lequel point devenant le point courant, la fin du codage intervenant lorsque la "marche arrière" est effectuée jusqu'au point de départ et que celui-ci n'a plus de voisin non codé ;

vi/ un usinage de la première zone ($Z''_1$) du tableau résultat par détermination du passage de l'outil par chacun des points codés à l'étape précédente en vue d'obtenir une succession de déplacements linéaires de l'outil qui soient orientés soit parallèlement aux axes du plan (X-Y), soit à 45° par rapport à ces axes, consistant en spécifiant au départ que tous les points codés sont des points "non usinés" :

- à déterminer un premier point codé, dit point de début d'usinage ;

- pour passer successivement d'un point courant au point suivant, ledit point courant étant au départ le point de début d'usinage, à rechercher parmi ses voisins le point "non usiné" de plus haut niveau et à déterminer si ce niveau est inférieur ou supérieur à celui du point courant ; s'il est inférieur, à considérer le point courant comme un point "usiné" sur lequel l'outil ne repasse pas ; s'il est supérieur, à considérer le point courant comme un point "en attente" sur lequel l'outil peut repasser.

14. Procédé selon la revendication 13, caractérisé en ce que l'élaboration du tableau résultat consiste, en utilisant un algorithme qui permet, connaissant l'état précédent - "usinable", "non usinable" ou "vide" -pris par chacun des points du tableau résultat ($14''$), de déterminer l'état résultant - "usinable", "non usinable" ou "vide" - que prend chacun de ces points du tableau résultat en fonction de la nature du profil considéré - surfaçage, îlot ou évidement - et du type - limite, intérieur ou extérieur - du point correspondant de même emplacement indicé dans le tableau intermédiaire (12) propre au profil considéré, à appliquer cet algorithme successivement pour chacun des profils considérés (PS ; PI ; PE) en partant pour le premier profil considéré du tableau résultat dont tous les points sont à l'état "usinable", et à reporter chacun des états résultants dans le tableau résultat sous la forme du même premier caractère si l'état résultant est un état "usinable" quel que soit le profil considéré, sous la forme du même deuxième caractère si l'état résultant est un état "vide" dans le cas où le profil considéré est le profil de surfaçage (PS), sous la forme du même troisième caractère si l'état résultant est un état "non usinable" dans le cas où le profil considéré est le profil d'îlot (PI) et sous la forme du même quatrième caractère si l'état résultant est un état "vide" dans le cas où le profil considéré est le profil d'évidement (PE).

15. Procédé selon l'une des revendications 1, 4, 7, 9, 11 et 13, caractérisé en ce qu'en partant du quadrillage (10) dont le pas est choisi égal à la moitié de la prise de passe d'usinage, laquelle prise de passe étant fonction du diamètre de l'outil, le procédé comprend un traitement du tableau résultat ($14 : 14'$ ; $14''$) après déport consistant à ne prendre en compte qu'une ligne sur deux et une colonne sur deux de manière à avoir un tableau résultat dont le pas est égal à la prise de passe d'usinage.

16. Procédé selon la revendication 15, caractérisé en ce que la prise de passe maximale d'usinage est inférieure à $D/\sqrt{2}$, D étant le diamètre de l'outil.

DEBUT

ENTREE : DONNEES DE DEFINITION DES PROFILS

FORMATION QUADRILLAGE  1

QUANTIFICATION PROFIL ET ELABORATION TABLEAU RESULTAT (FIG.2)  2

DEPORT PROFIL  3

CODAGE POINTS USINABLES (FIG.4)  4

USINAGE POINTS  5

SORTIE : TRAJET DE L'OUTIL

FIN

FIG.1

FIG.2

FIG.3

EP 0 396 438 A1

DEBUT

P$^\dagger$ DEPART = i, j

NIVEAU = 1
IDX = 1

CHEMIN(IDX)=(i,j)
TAB.ETAT(i,j)=CODÉ
TAB.NIV(i,j)=NIVEAU

P$^\dagger$ VOISIN(a,b)
NON CODÉ
?

NON

OUI

NIVEAU=TAB.NIV(i,j)
i = a
j = b

IDX = 1 ?

OUI

NON

IDX = IDX + 1

IDX = IDX - 1

CHEMIN(IDX) = (i,j)
TAB.ETAT(i,j)=CODÉ
TAB.NIV(i,j)=NIVEAU
+1

(i,j)=CHEMIN(IDX)

TOUS
LES POINTS SONT
CODÉS?

OUI

NON

FIN

<u>FIG.4</u>

FIG.5

FIG.6

FIG.7

FIG.8

FIG.9

# FIG. 10

J    $Z_2$    $Z_1$    14    n'

```
       1 2 3 4 5
         0 0 0 0 0 0 0 0 0 0 0 0 0 0 0 0 0 0 0 0 0 0 0 0 0 0 0
     2   0 0 0 0 0 0 0 0 0 0 0 0 0 0 0 0 0 0 0 0 0 0 0 0 0 0 0
 I→ 3   0 0 0 0 0 0 0 0 0 0 0 0 0 0 0 0 0 0 0 0 0 0 0 0 0 0 0
     4   0 0 0 0 0 0 1 1 1 1 1 1 1 1 1 1 1 0 0 0 0 0 0 0 0 0 0
     5   0 0 0 0 0 0 1 1 1 1 1 1 1 1 1 1 1 1 0 0 0 0 0 0 0 0 0   —
         0 0 0 0 0 0 1 1 1 1 1 1 1 1 1 1 1 1 0 1 1 0 0 0 0 0 0   — } p = P/2
         0 0 0 0 0 0 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 1 1 1 1 1 1 1 1 1 1 1 1 1 1 1 1 1 0 0 0 0 0 0
         0 0 0 0 1 1 1 1 1 1 1 1 1 1 1 1 1 1 1 1 1 0 0 0 0 0 0
         0 0 0 0 1 1 1 1 1 1 1 1 1 1 1 1 1 1 1 1 1 0 0 0 0 0 0
         0 0 0 0 1 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 1 1 1 1 1 1 1 1 1 1 1 1 1 1 1 1 0 0 0 0 0 0
         0 0 0 0 0 0 0 0 0 0 0 0 0 0 0 0 0 0 0 0 0 0 0 0 0 0 0
         0 0 0 0 0 0 0 0 0 0 0 0 0 0 0 0 0 0 0 0 0 0 0 0 0 0 0
 n       0 0 0 0 0 0 0 0 0 0 0 0 0 0 0 0 0 0 0 0 0 0 0 0 0 0 0
```

## FIG.11

## FIG.12

# FIG.13

## FIG.14

## FIG.15

## FIG.16

$J$  $Z_2$  $Z_1$  14  $n'$

$I \rightarrow$

$p = \dfrac{P}{2}$

$Z_3$

$Z_4$

$n$

## FIG.17

$J$  $Z_2$  $Z_1$  14  $n'$

$I \rightarrow$

$p = \dfrac{P}{2}$

$Z_3$

$Z_4$

$n$

## FIG.18

```
          1   2   3   4   5                       Z1      14   j
          0   0   0   0   0   0   0   0   0   0   0   0   0   0
                           Z2

      2   0   0   0   0   0   0   0   0   0   0   0   0   0   0
                     A   B
p=P {-3   0   0   0   1   1   1   1   1   1   0   0   0   0   0
    {-4   0   0   0   1   1   1   1   1   1   1   1   0   0   0

      5   0   0   0   1   2   2   2   2   1   1   1   0   0   0

   Z3     0   0   0   1   2   2   2   2   1   1   1   0   0   0

          0   0   1   1   1   2   2   1   1   3   1   1   0   0

          0   0   1   1   1   2   2   1   3   3   1   0   0   0

          0   0   0   1   1   1   1   1   1   1   1   0   0   0

          0   0   0   0   0   0   0   0   0   0   0   0   0   0

          0   0   0   0   0   0   0   0   0   0   0   0   0   0
                                                Z4
```

## FIG.19

```
   .   .   .   .   .   .   .   .   .   .   .   .   .   .
                                                    14
   .   .   .   .   .   .   .   .   .   .   .   .   .   .

              A   B
   .   .   .  1   2   3   4   5   6   .   .   .   .   .

   .   .   .  25  26  27  28  29  30   7   8   .   .   .

   .   .   .  24   .   .   .   .  37  31   9   .   .   .

   .   .   .  23   .   .   .   .  36  32  10   .   .   .

   .   .  22  27  24   .   .  35  33   ×  33  11   .   .

   .   .  21  26  25   .   .  34   ×   ×  12   .   .   .

   .   .   .  20  19  18  17  16  15  14  13   .   .   .

   .   .   .   .   .   .   .   .   .   .   .   .   .   .

   .   .   .   .   .   .   .   .   .   .   .   .   .   .
```

## FIG. 20

point suivant

F

point précédent

point courant

• points codés

o points non codés

## FIG. 21

14

# FIG. 22

## FIG.23

## FIG.24

# FIG.25

FIG.26

FIG.27

# FIG.28

## FIG.29

## FIG.30

# FIG. 31

$z'_2$    $z'_1$   14'   n'

$z'_3$

$z'_4$

$\left.\begin{array}{c} \\ \end{array}\right\} p = \dfrac{P}{2}$

```
          1  2  3  4  5
          0  0  0  0  0  0  0  0  0  0  0  0  0  0  0  0  0  0  0  0  0  0  0  0  0  0  0
       2  0  0  0  0  0  1  1  1  1  1  1  1  1  1  1  1  1  0  0  0  0  0  0  0  0  0  0
 I → 3  0  0  0  0  1  1  1  1  1  1  1  1  1  1  1  1  1  0  0  0  0  1  0  0  0  0  0  0
       4  0  0  0  0  0  1  1  1  1  1  1  1  1  1  1  1  1  1  1  1  1  1  0  0  0  0  0
       5  0  0  0  0  1  1  1  1  1  1  1  1  1  1  1  1  1  1  1  1  1  1  1  0  0  0  0
          0  0  0  0  1  1  1  1  1  1  1  1  1  1  1  1  1  1  1  1  1  1  1  0  0  0  0
          0  0  0  1  1  1  1  1  1  1  1  1  1  1  1  1  1  1  1  1  1  1  1  0  0  0  0 —
          0  0  0  1  1  1  1  1  1  1  1  1  1  1  1  1  1  1  1  1  1  1  1  0  0  0  0 —
          0  0  0  1  1  1  1  1  1  1  1  1  1  1  1  1  1  1  1  1  1  1  0  0  0
          0  0  0  1  1  1  1  1  1  1  2  2  2  2  1  1  1  1  1  1  1  1  1  0  0  0
 z'₃ — 0  0  0  1  1  1  1  1  1  1  2  2  2  2  1  1  1  1  1  1  1  1  1  0  0  0
          0  0  1  1  1  1  1  1  1  1  2  2  2  2  1  1  1  1  1  1  1  1  0  0  0
          0  0  1  1  1  1  1  1  1  1  2  2  2  1  1  3  3  3  3  1  1  1  1  1  0  0
          0  0  1  1  1  1  1  1  1  1  2  2  2  1  1  3  3  3  3  3  1  1  1  1  0  0
          0  0  1  1  1  1  1  1  1  1  2  1  1  1  3  3  3  3  3  1  1  1  1  0  0
          0  0  1  1  1  1  1  1  1  1  1  1  1  1  3  3  3  3  1  1  1  1  1  0  0
          0  0  1  1  1  1  1  1  1  1  1  1  1  1  3  3  3  3  1  1  1  1  1  0  0
          0  0  1  1  1  1  1  1  1  1  1  1  1  1  1  1  1  1  1  1  1  0  0  0
          0  0  0  1  1  1  1  1  1  1  1  1  1  1  1  1  1  1  1  1  0  0  0
          0  0  0  1  1  1  1  1  1  1  1  1  1  1  1  1  1  1  1  0  0  0
          0  0  0  0  1  1  1  1  1  1  1  1  1  1  1  1  1  1  0  0  0
          0  0  0  0  0  1  1  1  1  1  1  1  1  1  1  1  1  0  0  0
       n  0  0  0  0  0  0  0  0  0  0  0  0  0  0  0  0  0  0  0  0  0  0  0  0  0  0  0
```

FIG.32

FIG.33

EP 0 396 438 A1

# FIG.34

# FIG.35

# FIG.36

$z_2'$

| | 1 | 2 | 3 | 4 | 5 | | | | $z_1'$ | 14' | j | | | |
|---|---|---|---|---|---|---|---|---|---|---|---|---|---|---|
| | 0 | 0 | 0 | 1 | 1 | 1 | 1 | 1 | 1 | 1 | 0 | 0 | 0 | 0 | 0 |
| 2 | 0 | 0 | 4 | 4 | 1 | 1 | 1 | 1 | 1 | 1 | 1 | 1 | 1 | 0 | 0 |
| -3 | 0 | 0 | 4 | 4 | 1 | 1 | 1 | 1 | 1 | 1 | 1 | 1 | 1 | 0 | 0 |
| -4 | 0 | 0 | 4 | 4 | 1 | 1 | 1 | 1 | 1 | 1 | 1 | 1 | 1 | 1 | 0 |
| 5 | 0 | 0 | 4 | 1 | 1 | 2 | 2 | 2 | 1 | 1 | 1 | 1 | 1 | 1 | 0 |

$p = P$

$z_3'$

| 0 | 0 | 4 | 1 | 1 | 2 | 2 | 2 | 1 | 1 | 1 | 1 | 1 | 1 | 0 |
|---|---|---|---|---|---|---|---|---|---|---|---|---|---|---|

$z_5'$

| 0 | 4 | 4 | 1 | 1 | 2 | 2 | 2 | 1 | 1 | 1 | 1 | 1 | 1 | 0 |
|---|---|---|---|---|---|---|---|---|---|---|---|---|---|---|
| 0 | 4 | 4 | 1 | 1 | 2 | 2 | 2 | 1 | 3 | 3 | 1 | 1 | 1 | 0 |
| 0 | 4 | 4 | 1 | 1 | 1 | 1 | 1 | 1 | 1 | 1 | 1 | 1 | 1 | 0 |
| 0 | 0 | 4 | 1 | 1 | 1 | 1 | 1 | 1 | 1 | 1 | 1 | 1 | 1 | 0 |
| 0 | 0 | 4 | 4 | 1 | 1 | 1 | 1 | 1 | 1 | 1 | 1 | 1 | 1 | 0 |
| 0 | 0 | 0 | 1 | 1 | 1 | 1 | 1 | 1 | 1 | 1 | 1 | 1 | 0 | 0 |

$z_4'$

# FIG.37

| | | | $\binom{A'}{1}$ | $\binom{B'}{2}$ | 3 | 4 | 5 | 6 | 7 | 14' | | | | |
|---|---|---|---|---|---|---|---|---|---|---|---|---|---|---|
| × | × | × | 1 | 2 | 3 | 4 | 5 | 6 | 7 | × | × | × | × | × |
| × | × | · | · | 39 | 40 | 41 | 42 | 43 | 44 | 8 | 9 | 10 | × | × |
| × | × | · | · | 38 | 69 | 70 | 71 | 72 | 73 | 45 | 46 | 11 | × | × |
| × | × | · | · | 37 | 68 | 96 | 95 | 96 | 97 | 74 | 75 | 47 | 12 | × |
| × | × | · | 36 | 67 | · | · | · | 94 | 103 | 98 | 76 | 48 | 13 | × |
| × | × | · | 35 | 66 | · | · | · | 93 | 102 | 99 | 77 | 49 | 14 | × |
| × | · | · | 34 | 65 | · | · | · | 92 | 101 | 100 | 78 | 50 | 15 | × |
| × | · | · | 33 | 64 | · | · | · | 91 | × | × | 79 | 51 | 16 | × |
| × | · | · | 32 | 63 | 88 | 89 | 90 | 92 | 93 | 94 | 80 | 52 | 17 | × |
| × | × | · | 31 | 62 | 87 | 86 | 85 | 84 | 83 | 82 | 81 | 53 | 18 | × |
| × | × | · | · | 30 | 61 | 60 | 59 | 58 | 57 | 56 | 55 | 54 | 19 | × |
| × | × | × | 29 | 28 | 27 | 26 | 25 | 24 | 23 | 22 | ·21 | 20 | × | × |

# FIG. 38

# FIG. 39

## FIG.40

J

12

n'

1 2 3 4 5

I →

2
3
4
5

$p = \frac{P}{2}$

n

## FIG.41

J

12

n'

1 2 3 4 5

I →

2
3
4
5

$p = \frac{P}{2}$

n

# FIG.42

$Z''_2$  $Z''_1$  $14''$  $n'$

J

$$p = \frac{P}{2}$$

```
            1 2 3 4 5
            0 0 0 0 0 0 0 0 0 0 C 0 0 0 0 0 0 0 0 0 0 0 0 0 0 0 0 0 0
          2 0 0 0 0 0 1 1 1 1 1 1 1 1 1 1 1 1 0 0 0 0 0 0 0 0 0 0 0 0
  I ——  3 0 0 0 0 1 1 1 1 1 1 1 1 1 1 1 1 1 1 0 0 0 0 1 0 0 0 0 0 0
          4 0 0 0 0 1 1 1 1 1 1 1 1 1 1 1 1 1 1 1 1 1 1 0 0 0 0 0 0
          5 0 0 0 0 1 1 1 1 1 1 1 1 1 1 1 1 1 1 1 1 1 0 0 0 0 0 0
            0 0 0 0 1 1 1 1 1 1 1 1 1 1 1 1 1 1 1 1 1 1 0 0 0 0 0
            0 0 0 1 1 1 1 1 1 1 1 1 1 1 1 1 1 1 1 1 1 1 1 0 0 0
            0 0 0 1 1 1 1 1 1 1 1 1 1 1 1 1 1 1 1 1 1 1 1 1 0 0 0
            0 0 0 1 1 1 1 1 1 1 1 1 1 1 1 1 1 1 1 1 1 1 1 1 0 0 0
            0 0 0 1 1 1 1 1 1 1 1 1 1 1 1 1 1 1 1 1 1 1 1 1 0 0 0
            0 0 1 1 1 1 1 1 1 1 1 1 1 1 1 1 1 1 1 1 1 1 1 1 0 0 0
            0 0 1 1 1 1 1 1 1 1 1 1 1 1 1 1 1 1 1 1 1 1 1 1 1 0 0
            0 0 1 1 1 1 1 1 1 1 1 1 1 1 1 1 1 1 1 1 1 1 1 1 1 0 0
            0 0 1 1 1 1 1 1 1 1 1 1 1 1 1 1 1 1 1 1 1 1 1 1 1 0 0
            0 0 1 1 1 1 1 1 1 1 1 1 1 1 1 1 1 1 1 1 1 1 1 1 1 0 0
            0 0 1 1 1 1 1 1 1 1 1 1 1 1 1 1 1 1 1 1 1 1 1 1 1 0 0
            0 0 1 1 1 1 1 1 1 1 1 1 1 1 1 1 1 1 1 1 1 1 1 1 0 0 0
            0 0 0 1 1 1 1 1 1 1 1 1 1 1 1 1 1 1 1 1 1 1 1 0 0 0
            0 0 0 1 1 1 1 1 1 1 1 1 1 1 1 1 1 1 1 1 1 1 0 0 0
            0 0 0 0 1 1 1 1 1 1 1 1 1 1 1 1 1 1 1 1 1 0 0 0 0
            0 0 0 0 0 1 1 1 1 1 1 1 1 1 1 1 1 1 1 0 0 0 0 0
          n 0 0 0 0 0 0 0 0 0 0 0 0 0 0 0 0 0 0 0 0 0 0 0 0 0 0
```

## FIG.43

## FIG.44

# FIG.45

## FIG.46

## FIG.47

FIG.48

FIG.49

## FIG. 50

Z'₂ — Z''₁ — 14''

```
            1   2   3   4   5                       j
            0   0   1   1   1   1   1   1   1   1   0   0   0   0   0

      2     0   0   1   1   1   1   1   1   1   1   1   1   1   0   0

     -3     0   0   1   1   1   1   1   1   1   1   1   1   1   0   0
p=P
     -4     0   1   1   1   1   1   1   1   1   1   1   1   1   1   0

      5     0   1   1   1   1   2   2   2   1   1   1   1   1   1   0

Z''₃        0   1   1   1   1   2   2   2   1   1   1   1   1   1   0

            0   1   1   1   1   2   2   2   1   1   1   1   1   1   0

            0   1   1   1   1   2   2   2   1   3   3   1   1   1   0

            0   1   1   1   1   1   1   1   1   1   1   1   1   1   0

            0   1   1   1   1   1   1   1   1   1   1   1   1   1   0

            0   1   1   1   1   1   1   1   1   1   1   1   1   1   0

            0   0   1   1   1   1   1   1   1   1   1   1   1   0   0
```

Z''₄ — 14''

## FIG. 51

A'' B'' — 14''

```
   ×    ×   (1  (2   3    4    5    6    7    8    ×    ×    ×    ×

   ×    ×   41  42   43   44   45   46   47   48   9    10   11   ×    ×

   ×    ×   40  76   77   78   79   80   81   82   49   50   12   ×    ×

   ×   39   75 104  105  106  107  108  109  110   83   84   51   13   ×

   ×   38   74 103  125   .    .    .   118  119  111   85   52   14   ×

   ×   37   73 102  124   .    .    .   117  120  112   86   53   15   ×

   ×   36   72 101  123   .    .    .   116  114  113   87   54   16   ×

   ×   35   71 100  122   .    .    .   115   ×    ×    88   55   17   ×

   ×   34   70  99  121  120  119  118  117  116  117   89   56   18   ×

   ×   33   69  98   97   96   95   94   93   92   91   90   57   19   ×

   ×   32   68  67   66   65   64   63   62   61   60   59   58   20   ×

   ×    ×   31  30   29   28   27   26   25   24   23   22   21   ×    ×
```

# FIG. 52

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-290611 (FANUC LTD)<br>* page 3, ligne 1 - page 10, ligne 7; figures 1-12 * | 1-16 | G05B19/405 |
| A | GB-A-2207777 (MITSUBISHI DENKI KABUSHIKI KAISHA)<br>* page 3, ligne 12 - page 10, ligne 9; figures 1-8 * | 1-16 | |
| A | PATENT ABSTRACTS OF JAPAN<br>vol. 10, no. 198 (P-476)(2254) 11 juillet 1986,<br>& JP-A-61 42006 (FANUC LTD) 28 février 1986,<br>* le document en entier * | 1-16 | |

| DOMAINES TECHNIQUES RECHERCHES (Int. Cl.5) |
|---|
| G05B |

Le présent rapport a été établi pour toutes les revendications

| Lieu de la recherche | Date d'achèvement de la recherche | Examinateur |
|---|---|---|
| LA HAYE | 04 JUILLET 1990 | HAUSER L.E.R. |